(19) Europäisches Patentamt / European Patent Office / Office européen des brevets

(11) **EP 3 312 576 A1**

(12) **EUROPEAN PATENT APPLICATION**

(43) Date of publication:
**25.04.2018 Bulletin 2018/17**

(21) Application number: **16194833.6**

(22) Date of filing: **20.10.2016**

(51) Int Cl.:
**G01J 1/44** (2006.01)   **G01J 1/46** (2006.01)
**G01J 3/02** (2006.01)   **H04N 9/04** (2006.01)
**G01J 1/02** (2006.01)   **H04N 5/361** (2011.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **trinamiX GmbH**
**67056 Ludwigshafen (DE)**

(72) Inventors:
• **VALOUCH, Sebastian**
**67063 Ludwigshafen (DE)**

• **FEUERSTEIN, Bertram**
**67063 Ludwigshafen (DE)**
• **HENGEN, Stefan**
**67063 Ludwigshafen (DE)**
• **HERMES, Wilfried**
**67063 Ludwigshafen (DE)**
• **SEND, Robert**
**67063 Ludwigshafen (DE)**
• **BRUDER, Ingmar**
**67063 Ludwigshafen (DE)**

(74) Representative: **Herzog, Fiesser & Partner**
**Patentanwälte PartG mbB**
**Dudenstrasse 46**
**68167 Mannheim (DE)**

(54) **A PHOTODETECTOR COMPENSATING CIRCUIT**

(57)    A photodetector compensating circuit (110) is proposed. The photodetector compensating circuit (110) comprises:
- at least one photoconductor (112) having an electrical conductivity dependent on an illumination (114) of a light-sensitive region (116) of the photoconductor (112);
- at least one transimpedance amplifier (118), wherein the transimpedance amplifier (118) comprises at least one inverting operational amplifier (120) and one or both of at least one feedback resistor (122) having a resistance $R_F$ or at least one feedback capacitor (126) having a capacity $C_F$.

FIG.1

EP 3 312 576 A1

## Description

Field of the invention

The invention relates to a photodetector compensating circuit, a detector, a method of optical detection and use of a photodetector compensating circuit for a purpose of compensating at least one dependence of at least one signal of at least one photoconductor. Photodetector compensating circuits may be used to determine a measurable voltage response of photoconductor.

Prior art

Photoconductors usually are read out using a circuit comprising a voltage amplifier together with a voltage divider. An output signal determined by such a circuit depends on a dark resistance of the photoconductor.

The dark resistance, however, depends strongly on external parameters like illumination history of the photoconductor, temperature, humidity and exposure to contaminants. As a result, a signal strength of the photoconductor, i.e. a change in resistance for a given illumination intensity, may show a strong drift behavior, which regularly needs to be compensated and/or minimized by limiting the exposure of the photoconductor to external influences.

However, method and devices known for compensating and/or minimizing the exposure of the photoconductor to external influences may be complex and expensive, e.g. need cooling and/or heating systems, encapsulation, light shielding etc.

Problem addressed by the invention

Therefore, a problem addressed by the present invention is that of specifying a photodetector compensating circuit, a detector and method which at least substantially avoid the disadvantages of known circuits for read out of a photoconductor. In particular, simplified compensating of influences of external parameters on the read out of the photoconductor would be desirable.

Summary of the invention

This problem is solved by the invention with the features of the independent patent claims. Advantageous developments of the invention, which can be realized individually or in combination, are presented in the dependent claims and/or in the following specification and detailed embodiments.

As used herein, the expressions "have", "comprise" and "contain" as well as grammatical variations thereof are used in a non-exclusive way. Thus, the expression "A has B" as well as the expression "A comprises B" or "A contains B" may both refer to the fact that, besides B, A contains one or more further components and/or constituents, and to the case in which, besides B, no other components, constituents or elements are present in A.

In a first aspect of the present invention, a photodetector compensating circuit is disclosed. As used herein, a photodetector compensating circuit generally is a circuit adapted to read out at least one photodetector and to generate at least one output voltage signal dependent on the illumination of the photodetector. As used herein, the term "photodetector" generally refers to a detector adapted to change at least one property, e.g. conductivity, of the photodetector dependent on the illumination, in particular in response to illumination.

The photodetector compensating circuit comprises

- at least one photoconductor having an electrical conductivity dependent on an illumination of a light-sensitive region of the photoconductor;
- at least one transimpedance amplifier, wherein the transimpedance amplifier comprises at least one inverting operational amplifier and at least one feedback resistor having a resistance $R_F$.

As used herein, a photoconductor, also denoted as photoresistor, generally is a light-dependent resistor capable of having and/or exhibiting a specific electrical conductivity dependent on an illumination of the material of the photoconductor. The electrical conductivity, i.e. the invers of electrical resistance, of the material of the photoconductor may be dependent on the illumination of the material. In particular, the electrical resistance of the photoconductive material may be reduced when illuminated with light. In particular, the electrical conductivity may be increased when illuminated with light. As will be outlined in detail below, the photoconductor may comprise a light-sensitive region comprising a "photoconductive material". A photoconductor can, for example, be applied in light-sensitive detector circuits.

Photoconductors should be distinguished from photodiodes, for example in a photoconductive mode. Without wishing to be bound by theory, in photoconductors, the increase of the electric conductivity may be due to an increase of a number of free charge carriers generated when photons are absorbed. Instead, in photodiodes a photocurrent may be generated when light is absorbed in the depleted region of a junction semiconductor.

As used herein, the term "illumination" generally refers to electromagnetic radiation in one or more of the visible spectral range, the ultraviolet spectral range and the infrared spectral range. Therein, in partial accordance with standard ISO-21348, the term visible spectral range generally refers to a spectral range of 380 nm to 760 nm. The term infrared (IR) spectral range generally refers to electromagnetic radiation in the range of 760 nm to 1000 $\mu$m, wherein the range of 760 nm to 1.4 $\mu$m is usually denominated as the near infrared (NIR) spectral range, and the range from 15 $\mu$m to 1000 $\mu$m as the far infrared (FIR) spectral range. The term ultraviolet spectral range generally refers to electromagnetic radiation in the range of 1 nm to 380 nm, preferably in the range of 100 nm to 380 nm. In the following, the term "illumination" is also denoted as "light". Preferably, illumination as used within the present invention is visible light, i.e. light in the visible spectral range, and/or infrared light, i.e. light in the infrared spectral range.

As used herein, the term "light-sensitive region of the photoconductor" generally refers to an area within the photoconductor being sensitive to an illumination, e.g. by an incident light beam. For example, the light-sensitive region may be a two-dimensional or three-dimensional region which preferably, but not necessarily, is continuous and can form a continuous region. As used herein, the term "having an electrical resistivity dependent on an illumination" generally refers to the fact that the electrical conductivity of the photoconductor is adjusted and/or changed and/or varied dependent on the illumination, in particular an intensity of the illumination, of the light-sensitive region. In particular, in response to the illumination, the electrical conductivity is adjusted and/or changed and/or varied. Specifically, the electrical conductivity of the photoconductor may increase with increasing incident light intensity. The photodetector compensating circuit can have one or else a plurality of such light-sensitive regions.

The photoresistor may comprise at least one photoconductive material. Since an electrical resistivity is defined as the reciprocal value of the electrical conductivity, alternatively, the term "photoresistive material" may also be used to denominate the same kind of material. The light-sensitive region may comprise at least one photoconductive material selected from the group consisting of lead sulfide (PbS); lead selenide (PbSe); mercury cadmium telluride (HgCdTe); cadmium sulfide (CdS); cadmium selenide (CdSe); indium antimonide (InSb); indium arsenide (InAs); indium gallium arsenide (InGaAs); extrinsic semiconductors, e.g. doped Ge, Si, GaAs; organic semiconductors. However, other materials may be feasible. Further possible photoconductive materials are described in WO 2016/120392 A1, for example.

For example, the light-sensitive region may be illuminated by at least one illumination source. The illumination source can, for example, be or comprise an ambient light source and/or may be or may comprise an artificial illumination source. By way of example, the illumination source may comprise at least one infrared emitter and/or at least one emitter for visible light and/or at least one emitter for ultraviolet light. By way of example, the illumination source may comprise at least one light emitting diode and/or at least one laser diode. The illumination source can comprise, in particular, one or a plurality of the following illumination sources: a laser, in particular a laser diode, although in principle, alternatively or additionally, other types of lasers can also be used; a light emitting diode; an incandescent lamp; a neon light;

a flame source; an organic light source, in particular an organic light emitting diode; a structured light source. Alternatively or additionally, other illumination sources can also be used. The illumination source generally may be adapted to emit light in at least one of: the ultraviolet spectral range, the infrared spectral range. Most preferably, the at least one illumination source is adapted to emit light in the visible spectral range, preferably in the range of 500 nm to 780 nm, most preferably at 650 nm to 750 nm or at 690 nm to 700 nm.

As used herein, the term "transimpedance amplifier" refers to a current-to-voltage converter. The transimpedance amplifier may be adapted to amplify the current output signal of the photoconductor to a usable voltage signal. The photodetector compensating circuit may comprise at least one voltage source, also denoted as bias voltage source, adapted to apply the input voltage signal across the photoconductor. The transimpedance amplifier may be adapted to generate at least one output signal, in particular a voltage change of the input voltage signal, dependent on the resistance of the photoconductor.

The transimpedance amplifier comprises at least one inverting operational amplifier. The inverting operational amplifier may be adapted to change an output voltage in an opposite direction to an input voltage. The inverting operational amplifier may comprise an inverting input port (-), a non-inverting input port (+) and an output port. The photoconductor may directly or indirectly, i.e. via at least one further element, be electrically connected to the inverting port. The positive non-inverting input may be connected to a common ground or a voltage terminal and may be at a set voltage, preferably at zero volts or ground.

Other ways of constructing a transimpedance amplifier are possible. As an example the operational amplifier can be complemented by or completely compiled of one or more discrete amplification components, e.g. field effect transistors or bipolar transistors. As an example for a combination of operational amplifier and discrete components refer to http://electronicdesign.com/analog/whats-all-transimpedance-amplifier-stuff-anyhow-part-1.

In general a transimpedance amplifier can be defined as any electronic circuit that converts a current to a voltage using a feedback impedance element (e.g. a resistor and/or capacitor), an amplifying element (e.g. a transistor or operational amplifier) and provides a very low input impedance.

The transimpedance amplifier further comprises one or both of the at least one feedback resistor having a resistance $R_F$ or the at least one feedback capacitor having a capacity $C_F$. In particular, as the transimpedance amplifier is an amplifier in an inverting configuration, the feedback resistor may a value of $-R_F$. The feedback resistor may be a large valued feedback resistor, for example the resistance of the feedback resistor may be between 1 $\Omega$ and 1G$\Omega$, preferably between 1 k$\Omega$ and

10MΩ. The feedback resistor can be a fixed or variable resistor. A gain of the transimpedance amplifer may be specified and/or set by the feedback resistor. A first port of the feedback resistor may directly or indirectly be electrically connected to the inverting port and wherein a second port of the feedback resistor may directly or indirectly be electrically connected to the output port. The transimpedance amplifier may further comprise at least one further resistor which may directly or indirectly be coupled, in a serial manner, to the output port.

The feedback resistor and the feedback capacitor may be arranged in parallel. The feedback capacitor may be adapted to reduce gain peaking in order to achieve a flatter response. A first port of the feedback capacitor may directly or indirectly be electrically connected to the inverting port and wherein a second port of the feedback capacitor may directly or indirectly be electrically connected to the output port.

In one embodiment, the transimpedance amplifier may comprise the feedback resistor only, without the feedback capacitor. The first port of the feedback resistor may directly or indirectly be electrically connected to the inverting port and the second port of the feedback resistor may directly or indirectly be electrically connected to the output port. In another embodiment, the transimpedance amplifier may comprise the feedback capacitor inly, without the feedback resistor. The feedback capacitor may be used in an integrating way and replace the feedback resistor completely.

The photodetector compensating circuit may be adapted to compensate at least one dependence of at least one signal of the photoconductor on at least one parameter selected from the group consisting of: humidity, exposure to contaminants, illumination history, and temperature. The photoconductor may have a dark resistance $R_D$. As used herein, the term "dark resistance" generally refers to an electrical resistance of the photoconductor in unlit state, i.e. without illumination. The dark resistance may be dependent on and/or may change due to influences of the parameters selected from the group consisting of: humidity, exposure to contaminants, illumination history, and temperature. In prior art, photoconductors are usually read out using a circuit comprising a voltage amplifier together with a voltage divider. The output signal determined by such a circuit may depend on the dark resistance such that a signal strength of the photoconductor, i.e. a change in resistance for a given illumination intensity, may show a strong drift behavior. Transimpedance amplifiers are known to have a low signal-to-noise-ratio compared to voltage divider circuits, such that transimpedance amplifiers are generally not considered for readout of photoconductors. As used herein, the term "noise" generally refers to unwanted disturbances superposed upon a useful signal, which tend to obscure its information content. Surprisingly, it was found that using transimpedance amplifiers for readout of the photoconductor may result in an output signal independent of the dark resistance and, thus, for example in an improved signal strength.

The dark resistance of the photoconductor may be or may have a value between 100 Ω and 100 MΩ. Preferably, the dark resistance of the photoconductor may be between 10 kΩ and 10 MΩ, and most preferably the dark resistance of the photoconductor may be between 50 kΩ and 2.5 MΩ.

At least one output signal, for example a signal current, after the transimpedance amplifier, in particular at the output port of the inverting operational amplifier, may be independent of $R_D$. The photodetector compensating circuit may comprise at least one voltage output at which at least one output signal is determinable. As used herein, the term "output signal" generally refers to voltage signal, in particular a voltage change of the input voltage signal, dependent on the resistance of the photoconductor. As used herein, the term "voltage output" generally refers to an arbitrary connector and/or electrical contact at which an output voltage signal is determinable. The voltage output may be connected to the output port of the inverting operational amplifier. For example, the voltage output may provide a connection point for at least one evaluation device adapted to determine the voltage output signal at the voltage output. The output signal $\Delta U_{out}$ of the transimpedance amplifier may be

$$\Delta U_{out} = -U_{in}\frac{R_F}{R_D^2}\Delta R_D,$$

wherein $U_{in}$ is an input voltage signal and $\Delta R_D$ is a signal amplitude. Accordingly, the output signal may be proportional to $\Delta R_D/R_D^2$. Surprisingly, it was found that the signal amplitude is proportional to $R_D^2$. Thus, the dependencies of the output signal $\Delta U_{out}$ on $R_D$ may cancel out. The output signal may be independent of variations caused by the parameters, e.g. one or more of: humidity, exposure to contaminants, illumination history, and temperature. No additional referencing may be required. In addition, using a transimpedance amplifier may allow using a plurality of photoconductors with very different dark resistances in the same circuit without a need to change electronic parts. Using a transimpedance amplifier may allow encapsulation and light shielding to become less important, such that cheaper packaging and system integrating solutions may be possible. Furthermore, use of photoconductors with low dark resistance may be possible.

The photodetector compensating circuit may comprise at least one voltage input to which at least one input voltage signal is applicable across the photoconductor. The photodetector compensating circuit may comprise at least one voltage source, also denoted as bias voltage source, adapted to apply the input voltage signal across the photoconductor. As used herein, the term "input voltage signal" generally refers to an arbitrary voltage signal, in particular a bias voltage signal, which is applied across the material of the photoconductor. Specifically, the voltage signal may be a direct voltage signal. The input voltage signal may be between 0.001 V and 5000 V. Preferably, the input voltage signal may be between 1 V and 500 V and most preferably the input voltage signal may be between 5 V and 50 V. For this purpose, the bias voltage source may be connected to at least one input port of the photoconductor. As used herein, the term "voltage source" generally refers to a device being configured to apply a voltage signal, in particular a bias voltage, across a material of the photoconductor. As used herein, the term "voltage input" generally refers to an arbitrary connector and/or electrical contact adapted to provide a connection point for the voltage source.

As used herein, the term "evaluation device" generally refers to an arbitrary device designed to determine and/or generate at least one voltage output signal at the voltage output. As an example, the evaluation device may be or may comprise one or more integrated circuits, such as one or more application-specific integrated circuits (ASICs), and/or one or more data processing devices, such as one or more computers, preferably one or more microcomputers and/or microcontrollers. Additional components may be comprised, such as one or more preprocessing devices and/or data acquisition devices, such as one or more devices for receiving and/or preprocessing of the voltage signal, such as one or more AD-converters and/or one or more filters. Further, the evaluation device may comprise one or more data storage devices. Further, as outlined above, the evaluation device may comprise one or more interfaces, such as one or more wireless interfaces and/or one or more wirebound interfaces. The evaluation device may particularly comprise at least one data processing device, in particular an electronic data processing device, which can be designed to determine at least one output voltage signal. The evaluation device can also be designed to completely or partly control the at least one illumination source and/or to control the at least one voltage source and/or to adjust the at least one load resistor. The evaluation device may further comprise one or more additional components, such as one or more electronic hardware components and/or one or more software components, such as one or more measurement units and/or one or more evaluation units and/or one or more controlling units. For example, the evaluation device may comprise at least one measurement device adapted to measure the at least one output voltage signal, e.g. at least one voltmeter.

In a further aspect of the present invention, a detector comprising at least one photodetector compensating circuit according to the present invention is disclosed. The photodetector compensating circuit comprises:

- at least one photoconductor having an electrical conductivity dependent on an illumination of a light-sensitive region of the photoconductor;
- at least one transimpedance amplifier, wherein the transimpedance amplifier comprises at least one inverting operational amplifier and one or both of at least one feedback resistor having a resistance $R_F$ or at least one feedback capacitor having a capacity $C_F$.

The detector furthermore comprises at least one evaluation device adapted to determine the voltage output signal at the voltage output. The detector may comprise at least one illumination source. For further details concerning this aspect of the present invention, in particular further details of the photodetector compensating circuit, the evaluation device and the optional illumination source, reference may be made to the description of the photodetector compensating circuit as provided above and/or below.

For example, the photodetector compensating circuit may be used in optical sensors which employ the so-called FiP effect, for example WO 2012/110924 A1, WO 2014/097181 A1 and WO 2016/120392 A1. In an embodiment as disclosed in WO 2012/110924 A1, the detector may be adapted for optically detecting at least one object. The detector may comprise at least one optical sensor. The optical sensor may have at least one sensor region. The optical sensor may be designed to generate at least one sensor signal in a manner dependent on an illumination of the sensor region. The sensor signal, given the same total power of the illumination, may be dependent on a geometry of the illumination, in particular on a beam cross section of the illumination on the sensor area. The least one evaluation device may be designed to generate at least one item of geometrical information from the sensor signal, in particular at least one item of geometrical information about the illumination and/or the object.

In an embodiment as disclosed in WO 2014/097181 A1, the detector may be adapted for determining a position of at least one object. The detector may comprise:

- at least one transversal optical sensor, the transversal optical sensor being adapted to determine a transversal position of at least one light beam traveling from the object to the detector, the transversal position being a position in at least one dimension perpendicular to an optical axis of the detector, the transversal optical sensor being adapted to generate at least one transversal sensor signal;
- at least one longitudinal optical sensor, wherein the longitudinal optical sensor has at least one sensor region, wherein the longitudinal optical sensor is designed to generate at least one longitudinal sensor signal in a manner dependent on an illumination of the sensor region by the light beam, wherein the longitudinal sensor signal, given the same total power of the illumination, is dependent on a beam cross-section of the light beam in the sensor region;

- at least one evaluation device, wherein the evaluation device is designed to generate at least one item of information on a transversal position of the object by evaluating the transversal sensor signal and to generate at least one item of information on a longitudinal position of the object by evaluating the longitudinal sensor signal.

In an embodiment as disclosed in WO 2016/120392 A1, the detector may be adapted for an optical detection of at least one object. The detector may comprise:

- at least one longitudinal optical sensor, wherein the longitudinal optical sensor has at least one sensor region, wherein the longitudinal optical sensor is designed to generate at least one longitudinal sensor signal in a manner dependent on an illumination of the sensor region by a light beam, wherein the longitudinal sensor signal, given the same total power of the illumination, is dependent on a beam cross-section of the light beam in the sensor region, wherein the sensor region comprises at least one photoconductive material, wherein an electrical conductivity of the photoconductive material, given the same total power of the illumination, is dependent on the beam cross-section of the light beam in the sensor region, wherein the longitudinal sensor signal is dependent on the electrical conductivity;
- and at least one evaluation device, wherein the evaluation device is designed to generate at least one item of information on a longitudinal position of the object by evaluating the longitudinal sensor signal of the longitudinal optical sensor

In a further aspect of the present invention, a human-machine interface for exchanging at least one item of information between a user and a machine is proposed. The human-machine interface as proposed may make use of the fact that the above-mentioned detector in one or more of the embodiments mentioned above or as mentioned in further detail below may be used by one or more users for providing information and/or commands to a machine. Thus, preferably, the human-machine interface may be used for inputting control commands.

The human-machine interface comprises at least one detector according to the present invention, such as according to one or more of the embodiments disclosed above and/or according to one or more of the embodiments as disclosed in further detail below, wherein the human-machine interface is designed to generate at least one item of geometrical information of the user by means of the detector wherein the human-machine interface is designed to assign the geometrical information to at least one item of information, in particular to at least one control command.

In a further aspect of the present invention, an entertainment device for carrying out at least one entertainment function is disclosed. As used herein, an entertainment device is a device which may serve the purpose of leisure and/or entertainment of one or more users, in the following also referred to as one or more players. As an example, the entertainment device may serve the purpose of gaming, preferably computer gaming. Additionally or alternatively, the entertainment device may also be used for other purposes, such as for exercising, sports, physical therapy or motion tracking in general. Thus, the entertainment device may be implemented into a computer, a computer network or a computer system or may comprise a computer, a computer network or a computer system which runs one or more gaming software programs.

The entertainment device comprises at least one human-machine interface according to the present invention, such as according to one or more of the embodiments disclosed above and/or according to one or more of the embodiments disclosed below. The entertainment device is designed to enable at least one item of information to be input by a player by means of the human-machine interface. The at least one item of information may be transmitted to and/or may be used by a controller and/or a computer of the entertainment device.

In a further aspect of the present invention, a tracking system for tracking the position of at least one movable object is provided. As used herein, a tracking system is a device which is adapted to gather information on a series of past positions of the at least one object or at least one part of an object. Additionally, the tracking system may be adapted to provide information on at least one predicted future position of the at least one object or the at least one part of the object. The tracking system may have at least one track controller, which may fully or partially be embodied as an electronic device, preferably as at least one data processing device, more preferably as at least one computer or microcontroller. Again, the at least one track controller may comprise the at least one evaluation device and/or may be part of the at least one evaluation device and/or might fully or partially be identical to the at least one evaluation device.

The tracking system comprises at least one detector according to the present invention, such as at least one detector as disclosed in one or more of the embodiments listed above and/or as disclosed in one or more of the embodiments below. The tracking system further comprises at least one track controller. The tracking system may comprise one, two or more detectors, particularly two or more identical detectors, which allow for a reliable acquisition of depth information about the at least one object in an overlapping volume between the two or more detectors. The track controller is adapted to track a series of positions of the object, each position comprising at least one item of information on a position of the object at a specific point in time.

The tracking system may further comprise at least one beacon device connectable to the object. For a potential definition of the beacon device, reference may be made to WO 2014/097181 A1. The tracking system preferably is adapted such that the detector may generate an information on the position of the object of the at least one beacon device, in particular to generate the information on the position of the object which comprises a specific beacon device exhibiting a specific spectral sensitivity. Thus, more than one beacon exhibiting a different spectral sensitivity may be tracked by the detector of the present invention, preferably in a simultaneous manner. Herein, the beacon device may fully or partially be embodied as an active beacon device and/or as a passive beacon device. As an example, the beacon device may comprise at least one illumination source adapted to generate at least one light beam to be transmitted to the detector. Additionally or alternatively, the beacon device may comprise at least one reflector adapted to reflect light generated by an illumination source, thereby generating a reflected light beam to be transmitted to the detector.

In a further aspect of the present invention, a scanning system for determining at least one position of at least one object is provided. As used herein, the scanning system is a device which is adapted to emit at least one light beam being configured for an illumination of at least one dot located at at least one surface of the at least one object and for generating at least one item of information about the distance between the at least one dot and the scanning system. For the purpose of generating the at least one item of information about the distance between the at least one dot and the scanning system, the scanning system comprises at least one of the detectors according to the present invention, such as at least one of the detectors as disclosed in one or more of the embodiments listed above and/or as disclosed in one or more of the embodiments below.

Thus, the scanning system comprises at least one illumination source which is adapted to emit the at least one light beam being configured for the illumination of the at least one dot located at the at least one surface of the at least one object. As used herein, the term "dot" refers to a small area on a part of the surface of the object which may be selected, for example by a user of the scanning system, to be illuminated by the illumination source. Preferably, the dot may exhibit a size which may, on one hand, be as small as possible in order to allow the scanning system determining a value for the distance between the illumination source comprised by the scanning system and the part of the surface of the object on which the dot may be located as exactly as possible and which, on the other hand, may be as large as possible in order to allow the user of the scanning system or the scanning system itself, in particular by an automatic procedure, to detect a presence of the dot on the related part of the surface of the object.

For this purpose, the illumination source may comprise an artificial illumination source, in particular at least one laser source and/or at least one incandescent lamp and/or at least one semiconductor light source, for example, at least one light-emitting diode, in particular an organic and/or inorganic light-emitting diode. On account of their generally defined beam profiles and other properties of handleability, the use of at least one laser source as the illumination source is particularly preferred. Herein, the use of a single laser source may be preferred, in particular in a case in which it may be important to provide a compact scanning system that might be easily storable and transportable by the user. The illumination source may thus, preferably be a constituent part of the detector and may, therefore, in particular be integrated into the detector, such as into the housing of the detector. In a preferred embodiment, particularly the housing of the scanning system may comprise at least one display configured for providing distance-related information to the user, such as in an easy-to-read manner. In a further preferred embodiment, particularly the housing of the scanning system may, in addition, comprise at least one button which may be configured for operating at least one function related to the scanning system, such as for setting one or more operation modes. In a further preferred embodiment, particularly the housing of the scanning system may, in addition, comprise at least one fastening unit which may be configured for fastening the scanning system to a further surface, such as a rubber foot, a base plate or a wall holder, such comprising as magnetic material, in particular for increasing the accuracy of the distance measurement and/or the handleability of the scanning system by the user.

In a particularly preferred embodiment, the illumination source of the scanning system may, thus, emit a single laser beam which may be configured for the illumination of a single dot located at the surface of the object. By using at least one of the detectors according to the present invention at least one item of information about the distance between the at least one dot and the scanning system may, thus, be generated. Hereby, preferably, the distance between the illumination system as comprised by the scanning system and the single dot as generated by the illumination source may be determined, such as by employing the evaluation device as comprised by the at least one detector. However, the scanning system may, further, comprise an additional evaluation system which may, particularly, be adapted for this purpose. Alternatively or in addition, a size of the scanning system, in particular of the housing of the scanning system, may be taken into account and, thus, the distance between a specific point on the housing of the scanning system, such as a front edge or a back edge of the housing, and the single dot may, alternatively, be determined.

Alternatively, the illumination source of the scanning system may emit two individual laser beams which may be configured for providing a respective angle, such as a right angle, between the directions of an emission of the beams, whereby two respective dots located at the surface of the same object or at two different surfaces at two separate objects may be illuminated. However, other values for the respective angle between the two individual laser beams may also be feasible. This feature may, in particular, be employed for indirect measuring functions, such as for deriving an indirect distance which may not be directly accessible, such as due to a presence of one or more obstacles between the scanning system and the dot or which may otherwise be hard to reach. By way of example, it may, thus, be feasible to determine a value for a height of an object by measuring two individual distances and deriving the height by using the Pythagoras formula. In particular for being able to keep a predefined level with respect to the object, the scanning system may, further, comprise at least one leveling unit, in particular an integrated bubble vial, which may be used for keeping the predefined level by the user.

As a further alternative, the illumination source of the scanning system may emit a plurality of individual laser beams, such as an array of laser beams which may exhibit a respective pitch, in particular a regular pitch, with respect to each other and which may be arranged in a manner in order to generate an array of dots located on the at least one surface of the at least one object. For this purpose, specially adapted optical elements, such as beam-splitting devices and mirrors, may be provided which may allow a generation of the described array of the laser beams.

Thus, the scanning system may provide a static arrangement of the one or more dots placed on the one or more surfaces of the one or more objects. Alternatively, illumination source of the scanning system, in particular the one or more laser beams, such as the above described array of the laser beams, may be configured for providing one or more light beams which may exhibit a varying intensity over time and/or which may be subject to an alternating direction of emission in a passage of time. Thus, the illumination source may be configured for scanning a part of the at least one surface of the at least one object as an image by using one or more light beams with alternating features as generated by the at least one illumination source of the scanning device. In particular, the scanning system may, thus, use at least one row scan and/or line scan, such as to scan the one or more surfaces of the one or more objects sequentially or simultaneously. Thus, the scanning system may be adapted to measure angles by measuring three or more dots, or the scanning system may be adapted to measure corners or narrow regions such as a gable of a roof, which may be hardly accessible using a conventional measuring stick.

As a non-limiting example, the scanning system may be attached to a tripod and point towards an object or region with a several corners and surfaces. One or more flexibly movable laser sources are attached to the scanning system. The one or more laser sources are moved as such that they illuminate points of interest. The position of the illuminated points with respect to the scanning system is measured when pressing a designated button on the scanning system and the position information is transmitted via a wireless interface to a mobile phone. The position information is stored in a mobile phone application. The laser sources are moved to illuminate further points of interest the position of which are measured and transmitted to the mobile phone application. The mobile phone application may transform the set of points into a 3d model by connecting adjacent points with planar surfaces. The 3d model may be stored and processed further. The distances and or angles between the measured points or surfaces may be displayed directly on a display attached to a scanning system or on the mobile phone to which the position information is transmitted.

As a non-limiting example, a scanning system may comprise two or more flexible movable laser sources to project points and further one movable laser source projecting a line. The line may be used to arrange the two or more laser spots along a line and the display of the scanning device may display the distance between the two or more laser spots that may be arranged along the line, such as at equal distance. In the case of two laser spots, a single laser source may be used whereas the distance of the projected points is modified using one or more beam-splitters or prisms, where a beam-splitter or prism can be moved as such that the projected laser spots move apart or closer together. Further, the scanning system may be adapted to project further patterns such as a right angle, a circle, a square, a triangle, or the like, along which a measurement can be done by projecting laser spots and measuring their position.

As a non-limiting example, the scanning system may be adapted to support the work with tools, such as wood or metal processing tools, such as a saw, a driller, or the like. Thus, the scanning system may be adapted to measure the distance in two opposite directions and display the two measured distances or the sum of the distances in a display. Further, the scanning system may be adapted to measure the distance to the edge of a surface as such that when the scanning system is placed on the surface, a laser point is moved automatically away from the scanning system along the surface, until the distance measurement shows a sudden change due to a corner or the edge of a surface. This makes it possible to measure the distance of the end of a wood plank while the scanning device is placed on the plank but remote from its end. Further, the scanning system may measure the distance of the end of a plank in one direction and project a line or circle or point in a designated distance in the opposite direction. The scanning system may be adapted to project the line or circle or point in a distance depending on the distance measured in the opposite direction such as depending on a predetermined sum distance. This allows working with a tool such as a saw or driller at the projected position while placing the scanning system in a safe distance from the tool and simultaneously perform a process using the tool in a predetermined distance to the edge of the plank. Further, the scanning system may be adapted to project points or lines or the like in two opposite directions in a predetermined distance. When the sum of the distances is changed, only one of the projected distances changes.

As a non-limiting example, the scanning system may be adapted to be placed onto a surface, such as a surface on which a task is performed, such as cutting, sawing, drilling, or the like, and to project a line onto the surface in a predetermined distance that can be adjusted such as with buttons on the scanning device.

In a further aspect of the present invention, a stereoscopic system for generating at least one single circular, three-dimensional image of at least one object is provided. As used herein, the stereoscopic system as disclosed above and/or below may comprise at least two of the FiP sensors as the longitudinal optical sensors, wherein a first FiP sensor may be comprised in a tracking system, in particular in a tracking system according to the present invention, while a second FiP sensor may be comprised in a scanning system, in particular in a scanning system according to the present invention. Herein, the FiP sensors may, preferably, be arranged in separate beam paths in a collimated arrangement, such as by aligning the FiP sensors parallel to the optical axis and individually displaced perpendicular to the optical axis of the stereoscopic system. Thus, the FiP sensors may be able to generate or increase a perception of depth information, especially, by obtaining the depth information by a combination of the visual information derived from the individual FiP sensors which have overlapping fields of view and are, preferably, sensitive to an individual modulation frequency. For this purpose, the individual FiP sensors may, preferably, be spaced apart from each other by a distance from 1 cm to 100 cm, preferably from 10 cm to 25 cm, as determined in the direction perpendicular to the optical axis. In this preferred embodiment, the tracking system may, thus, be employed for determining a position of a modulated active target while the scanning system which is adapted to project one or more dots onto the one or more surfaces of the one or more objects may be used for generating at least one item of information about the distance between the at least one dot and the scanning system. In addition, the stereoscopic system may further comprise a separate position sensitive device being adapted for generating the item of information on the transversal position of the at least one object within the image as described elsewhere in this application.

Besides allowing stereoscopic vision, further particular advantages of the stereoscopic system which are primarily based on a use of more than one longitudinal optical sensors may, in particular, include an increase of the total intensity and/or a lower detection threshold. Further, whereas in a conventional stereoscopic system which comprises at least two conventional position sensitive devices corresponding pixels in the respective images have to be determined by applying considerable computational effort, in the stereoscopic system according to the present invention which comprises at least two FiP sensors the corresponding pixels in the respective images being recorded by using the FiP sensors, wherein each of the FiP sensors may be operated with a different modulation frequency, may apparently be assigned with respect to each other. Thus, it may be emphasized that the stereoscopic system according to the present invention may allow generating the at least one item of information on the longitudinal position of the object as well as on the transversal position of the object with reduced effort.

For further details of the stereoscopic system, reference may be made to the description of the tracking system and the scanning system, respectively.

In a further aspect of the present invention, a camera for imaging at least one object is disclosed. The camera comprises at least one detector according to the present invention, such as disclosed in one or more of the embodiments given above or given in further detail below. Thus, the detector may be part of a photographic device, specifically of a digital camera. Specifically, the detector may be used for 3D photography, specifically for digital 3D photography. Thus, the detector may form a digital 3D camera or may be part of a digital 3D camera. As used herein, the term "photography" generally refers to the technology of acquiring image information of at least one object. As further used herein, a "camera" generally is a device adapted for performing photography. As further used herein, the term "digital photography" generally refers to the technology of acquiring image information of at least one object by using a plurality of light-sensitive elements adapted to generate electrical signals indicating an intensity of illumination, preferably digital electrical signals. As further used herein, the term "3D photography" generally refers to the technology of acquiring image information of at least one object in three spatial dimensions. Accordingly, a 3D camera is a device adapted for performing 3D photography. The camera generally may be adapted for acquiring a single image, such as a single 3D image, or may be adapted for acquiring a plurality of images, such as a sequence of images. Thus, the camera may also be a video camera adapted for video applications, such as for acquiring digital video sequences.

Thus, generally, the present invention further refers to a camera, specifically a digital camera, more specifically a 3D camera or digital 3D camera, for imaging at least one object. As outlined above, the term imaging, as used herein, generally refers to acquiring image information of at least one object. The camera comprises at least one detector according to the present invention. The camera, as outlined above, may be adapted for acquiring a single image or for acquiring a plurality of images, such as image sequence, preferably for acquiring digital video sequences. Thus, as an example, the camera may be or may comprise a video camera. In the latter case, the camera preferably comprises a data memory for storing the image sequence.

In a further aspect of the present invention, a method for optical detection of at least one illumination of at least one photodetector is disclosed. The at least one photoconductor is illuminated by at least one light beam. The method comprises using at least one detector according to the present invention. For further details concerning this aspect of the present invention, in particular further details of the detector, the photodetector compensating circuit, the evaluation device and the illumination source, reference may be made to the description of the photodetector compensating circuit as provided above and/or below.

In a further aspect of the present invention, a use of a photodetector compensating circuit according to the present invention for a purpose of compensating at least one dependence of at least one signal of at least one photoconductor on at least one parameter selected from the group consisting of: humidity, exposure to contaminants, illumination history, illumination bias and temperature.

Further, the devices according to the present invention may be used for infra-red detection applications, heat-detection applications, thermometer applications, heat-seeking applications, flame-detection applications, fire-detection applications, smoke-detection applications, temperature sensing applications, spectroscopy applications, or the like. Further, devices according to the present invention may be used in photocopy or xerography applications. Further, devices according to the present invention may be used to monitor exhaust gas, to monitor combustion processes, to monitor pollution, to monitor industrial processes, to monitor chemical processes, to monitor food processing processes, to assess water quality, to assess air quality, or the like. Further, devices according to the present invention may be used for quality control, temperature control, motion control, exhaust control, gas sensing, gas analytics, motion sensing, chemical sensing, or the like.

The photodetector circuit may be used in general in all types of equipment using a photoconductor as sensor element. For example, the photodetector circuit may be used in spectrometers, moisture measurement instruments, thickness measurement instruments, gas analysis instruments, chemical analysis instruments, process control instruments, quality check instruments, automation instruments, food quality instrument. All instruments can also be a part, component or submodule of another piece of equipment. In particular, the photodetector compensating circuit may be used in optical sensors. For example, the photodetector compensating circuit may be used in optical sensors which employ the so-called FiP effect, for example WO 2012/110924 A1, WO 2014/097181 A1 and WO 2016/120392 A1.

In a further aspect of the present invention, a use of a detector according to the present invention is disclosed. Therein, a use of the detector for a purpose of determining a position of an object, in particular a lateral position of an object, is proposed, in particular, for a purpose of use selected from the group consisting of: a position measurement, in particular in traffic technology; an entertainment application; a security application; a human-machine interface application; a tracking application; a scanning application; a stereoscopic vision application; a photography application; an imaging application or camera application; a mapping application for generating maps of at least one space; a homing or tracking beacon detector for vehicles; a position measurement of objects with a thermal signature (hotter or colder than background); a machine vision application; a robotic application.

Thus, generally, the devices according to the present invention, such as the detector, may be applied in various fields of uses. Specifically, the detector may be applied for a purpose of use, selected from the group consisting of: a position measurement in traffic technology; an entertainment application; a security application; a human-machine interface application; a tracking application; a photography application; a cartography application; a mapping application for generating maps of at least one space; a homing or tracking beacon detector for vehicles; a mobile application; a webcam; an audio device; a Dolby surround audio system; a computer peripheral device; a gaming application; a camera or video application; a surveillance application; an automotive application; a transport application; a logistics application; a vehicle application; an airplane application; a ship application; a spacecraft application; a robotic application; a medical application; a sports' application; a building application; a construction application; a manufacturing application; a machine vision application; a use in combination with at least one sensing technology selected from time-of-flight detector, radar, Lidar, ultrasonic sensors, or interferometry. Additionally or alternatively, applications in local and/or global positioning systems may be named, especially landmark-based positioning and/or navigation, specifically for use in cars or other vehicles (such as trains, motorcycles, bicycles, trucks for cargo transportation), robots or for use by pedestrians. Further, indoor positioning systems may be named as potential applications, such as for household applications and/or for robots used in manufacturing, logistics, surveillance, or maintenance technology.

Thus, firstly, the devices according to the present invention may be used in mobile phones, tablet computers, laptops, smart panels or other stationary or mobile or wearable computer or communication applications. Thus, the devices according to the present invention may be combined with at least one active light source, such as a light source emitting light in the visible range or infrared spectral range, in order to enhance performance. Thus, as an example, the devices according to the present invention may be used as cameras and/or sensors, such as in combination with mobile software for scanning and/or detecting environment, objects and living beings. The devices according to the present invention may even be combined with 2D cameras, such as conventional cameras, in order to increase imaging effects. The devices according to the present invention may further be used for surveillance and/or for recording purposes or as input devices to control mobile devices, especially in combination with voice and/or gesture recognition. Thus, specifically, the devices according to the present invention acting as human-machine interfaces, also referred to as input devices, may be used in mobile applications, such as for controlling other electronic devices or components via the mobile device, such as the mobile phone. As an example, the mobile application including at least one device according to the present invention may be used for controlling a television set, a game console, a music player or music device or other entertainment devices.

Further, the devices according to the present invention may be used in webcams or other peripheral devices for computing applications. Thus, as an example, the devices according to the present invention may be used in combination with software for imaging, recording, surveillance, scanning, or motion detection. As outlined in the context of the human-machine interface and/or the entertainment device, the devices according to the present invention are particularly useful for giving commands by facial expressions and/or body expressions. The devices according to the present invention can be combined with other input generating devices like e.g. mouse, keyboard, touchpad, microphone etc. Further, the devices according to the present invention may be used in applications for gaming, such as by using a webcam. Further, the devices according to the present invention may be used in virtual training applications and/or video conferences. Further, devices according to the present invention may be used to recognize or track hands, arms, or objects used in a virtual or augmented reality application, especially when wearing head mounted displays.

Further, the devices according to the present invention may be used in mobile audio devices, television devices and gaming devices, as partially explained above. Specifically, the devices according to the present invention may be used as controls or control devices for electronic devices, entertainment devices or the like. Further, the devices according to the present invention may be used for eye detection or eye tracking, such as in 2D- and 3D-display techniques, especially with transparent displays for augmented reality applications and/or for recognizing whether a display is being looked at and/or from which perspective a display is being looked at. Further, devices according to the present invention may be used to explore a room, boundaries, obstacles, in connection with a virtual or augmented reality application, especially when wearing a head-mounted display.

Further, the devices according to the present invention may be used in or as digital cameras such as DSC cameras and/or in or as reflex cameras such as SLR cameras. For these applications, reference may be made to the use of the devices according to the present invention in mobile applications such as mobile phones, as disclosed above.

Further, the devices according to the present invention may be used for security or surveillance applications. Thus, as an example, at least one device according to the present invention can be combined with one or more digital and/or analogue electronics that will give a signal if an object is within or outside a predetermined area (e.g. for surveillance applications in banks or museums). Specifically, the devices according to the present invention may be used for optical encryption. Detection by using at least one device according to the present invention can be combined with other detection devices to complement wavelengths, such as with IR, x-ray, UV-VIS, radar or ultrasound detectors. The devices according to the present invention may further be combined with an active infrared light source to allow detection in low light surroundings. The devices according to the present invention are generally advantageous as compared to active detector systems, specifically since the devices according to the present invention avoid actively sending signals which may be detected by third parties, as is the case e.g. in radar applications, ultrasound applications, LIDAR or similar active detector devices. Thus, generally, the devices according to the present invention may be used for an unrecognized and undetectable tracking of moving objects. Additionally, the devices according to the present invention generally are less prone to manipulations and irritations as compared to conventional devices.

Further, given the ease and accuracy of 3D detection by using the devices according to the present invention, the devices according to the present invention generally may be used for facial, body and person recognition and identification. Therein, the devices according to the present invention may be combined with other detection means for identification or personalization purposes such as passwords, finger prints, iris detection, voice recognition or other means. Thus, generally, the devices according to the present invention may be used in security devices and other personalized applications.

Further, the devices according to the present invention may be used as 3D barcode readers for product identification.

In addition to the security and surveillance applications mentioned above, the devices according to the present invention generally can be used for surveillance and monitoring of spaces and areas. Thus, the devices according to the present invention may be used for surveying and monitoring spaces and areas and, as an example, for triggering or executing alarms in case prohibited areas are violated. Thus, generally, the devices according to the present invention may be used for surveillance purposes in building surveillance or museums, optionally in combination with other types of sensors, such as in combination with motion or heat sensors, in combination with image intensifiers or image enhancement devices and/or photomultipliers. Further, the devices according to the present invention may be used in public spaces or crowded spaces to detect potentially hazardous activities such as commitment of crimes such as theft in a parking lot or unattended objects such as unattended baggage in an airport.

Further, the devices according to the present invention may advantageously be applied in camera applications such as video and camcorder applications. Thus, the devices according to the present invention may be used for motion capture and 3D-movie recording. Therein, the devices according to the present invention generally provide a large number of advantages over conventional optical devices. Thus, the devices according to the present invention generally require a lower complexity with regard to optical components. Thus, as an example, the number of lenses may be reduced as compared to conventional optical devices, such as by providing the devices according to the present invention having one lens only. Due to the reduced complexity, very compact devices are possible, such as for mobile use. Conventional optical systems having two or more lenses with high quality generally are voluminous, such as due to the general need for voluminous beam-splitters. Further, the devices according to the present invention generally may be used for focus/autofocus devices, such as autofocus cameras. Further, the devices according to the present invention may also be used in optical microscopy, especially in confocal microscopy.

Further, the devices according to the present invention generally are applicable in the technical field of automotive technology and transport technology. Thus, as an example, the devices according to the present invention may be used as distance and surveillance sensors, such as for adaptive cruise control, emergency brake assist, lane departure warning, surround view, blind spot detection, traffic sign detection, traffic sign recognition, lane recognition, rear cross traffic alert, light source recognition for adapting the head light intensity and range depending on approaching traffic or vehicles driving ahead, adaptive front-lighting systems, automatic control of high beam head lights, adaptive cutoff lights in front light systems, glare-free high beam front lighting systems, marking animals, obstacles, or the like by headlight illumination, rear cross traffic alert, and other driver assistance systems, such as advanced driver assistance systems, or other automotive and traffic applications. Further, devices according to the present invention may be used in driver assistance systems which may, particularly, be adapted for anticipating maneuvers of the driver beforehand for collision avoidance. Further, the devices according to the present invention can also be used for velocity and/or acceleration measurements, such as by analyzing a first and second time-derivative of position information gained by using the detector according to the present invention. This feature generally may be applicable in automotive technology, transportation technology or general traffic technology. Applications in other fields of technology are feasible. A specific application in an indoor positioning system may be the detection of positioning of passengers in transportation, more specifically to electronically control the use of safety systems such as airbags. Herein, the use of an airbag may, especially, be prevented in a case in which the passenger may be located within the vehicle in a manner that a use of the airbag might cause an injury, in particular a severe injury, with the passenger. Further, in vehicles such as cars, trains, planes or the like, especially in autonomous vehicles, devices according to the present invention may be used to determine whether a driver pays attention to the traffic or is distracted, or asleep, or tired, or incapable of driving, such as due to the consumption of alcohol or other drugs.

In these or other applications, generally, the devices according to the present invention may be used as standalone devices or in combination with other sensor devices, such as in combination with radar and/or ultrasonic devices. Specifically, the devices according to the present invention may be used for autonomous driving and safety issues. Further, in these applications, the devices according to the present invention may be used in combination with infrared sensors, radar sensors, which are sonic sensors, two-dimensional cameras or other types of sensors. In these applications, the generally passive nature of the devices according to the present invention is advantageous. Thus, since the devices according to the present invention generally do not require emitting signals, the risk of interference of active sensor signals with other signal sources may be avoided. The devices according to the present invention specifically may be used in combination with recognition software, such as standard image recognition software. Thus, signals and data as provided by the devices according to the present invention typically are readily processable and, therefore, generally require lower calculation power than established stereovision systems such as LIDAR. Given the low space demand, the devices according to the present invention such as cameras may be placed at virtually any place in a vehicle, such as on or behind a window screen, on a front hood, on bumpers, on lights, on mirrors or other places and the like. Various detectors according to the present invention such as one or more detectors based on the effect disclosed within the present invention can be combined, such as in order to allow autonomously driving vehicles or in order to increase the performance of active safety concepts. Thus, various devices according to the present invention may be combined with one or more other devices according to the present invention and/or conventional sensors, such as in the windows like rear window, side window or front window, on the bumpers or on the lights.

A combination of at least one device according to the present invention such as at least one detector according to the present invention with one or more rain detection sensors is also possible. This is due to the fact that the devices according to the present invention generally are advantageous over conventional sensor techniques such as radar, specifically during heavy rain. A combination of at least one device according to the present invention with at least one conventional sensing technique such as radar may allow for a software to pick the right combination of signals according to the weather conditions.

Further, the devices according to the present invention may generally be used as break assist and/or parking assist and/or for speed measurements. Speed measurements can be integrated in the vehicle or may be used outside the vehicle, such as in order to measure the speed of other cars in traffic control. Further, the devices according to the present invention may be used for detecting free parking spaces in parking lots.

Further, the devices according to the present invention may generally be used for vision, in particular for vision under difficult visibility conditions, such as in night vision, fog vision, or fume vision. For achieving this purpose, the detector may be sensitive at least within a wavelength range in which small particles, such as particles being present in smoke or fume, or small droplets, such as droplets being present in fog, mist or haze, may not reflect an incident light beam or only a small partition thereof. As generally known, the reflection of the incident light beam may be small or negligent in a case in which the wavelength of the incident beam exceeds the size of the particles or of the droplets, respectively. Further, might vision may be enabled by detecting thermal radiation being emitted by a bodies and objects. Thus, the detector may particularly be sensitive within the infrared (IR) spectral range, preferably within the mid infrared (MidIR) spectral range, may, thus, allow good visibility even at night, in fume, smoke, fog, mist, or haze.

Further, the devices according to the present invention may be used in the fields of medical systems and sports. Thus, in the field of medical technology, surgery robotics, e.g. for use in endoscopes, may be named, since, as outlined above, the devices according to the present invention may require a low volume only and may be integrated into other devices. Specifically, the devices according to the present invention having one lens, at most, may be used for capturing 3D information in medical devices such as in endoscopes. Further, the devices according to the present invention may be combined with an appropriate monitoring software, in order to enable tracking and analysis of movements. This may allow an instant overlay of the position of a medical device, such as an endoscope or a scalpel, with results from medical imaging, such as obtained from magnetic resonance imaging, x-ray imaging, or ultrasound imaging. These applications are specifically valuable e.g. in medical treatments where precise location information is important such as in brain surgery and long-distance diagnosis and tele-medicine. Further, the devices according to the present invention may be used in 3D-body scanning. Body scanning may be applied in a medical context, such as in dental surgery, plastic surgery, bariatric surgery, or cosmetic plastic surgery, or it may be applied in the context of medical diagnosis such as in the diagnosis of myofascial pain syndrome, cancer, body dysmorphic disorder, or further diseases. Body scanning may further be applied in the field of sports to assess ergonomic use or fit of sports equipment.

Body scanning may further be used in the context of clothing, such as to determine a suitable size and fitting of clothes. This technology may be used in the context of tailor-made clothes or in the context of ordering clothes or shoes from the internet or at a self-service shopping device such as a micro kiosk device or customer concierge device. Body scanning in the context of clothing is especially important for scanning fully dressed customers.

Further, the devices according to the present invention may be used in the context of people counting systems, such as to count the number of people in an elevator, a train, a bus, a car, or a plane, or to count the number of people passing a hallway, a door, an aisle, a retail store, a stadium, an entertainment venue, a museum, a library, a public location, a cinema, a theater, or the like. Further, the 3D-function in the people counting system may be used to obtain or estimate further information about the people that are counted such as height, weight, age, physical fitness, or the like. This information may be used for business intelligence metrics, and/or for further optimizing the locality where people may be counted to make it more attractive or safe. In a retail environment, the devices according to the present invention in the context of people counting may be used to recognize returning customers or cross shoppers, to assess shopping behavior, to assess the percentage of visitors that make purchases, to optimize staff shifts, or to monitor the costs of a shopping mall per visitor. Further, people counting systems may be used for anthropometric surveys. Further, the devices according to the present invention may be used in public transportation systems for automatically charging passengers depending on the length of transport. Further, the devices according to the present invention may be used in playgrounds for children, to recognize injured children or children engaged in dangerous activities, to allow additional interaction with playground toys, to ensure safe use of playground toys or the like.

Further, the devices according to the present invention may be used in construction tools, such as a range meter that determines the distance to an object or to a wall, to assess whether a surface is planar, to align or objects or place objects in an ordered manner, or in inspection cameras for use in construction environments or the like.

Further, the devices according to the present invention may be applied in the field of sports and exercising, such as for training, remote instructions or competition purposes. Specifically, the devices according to the present invention may be applied in the fields of dancing, aerobic, football, soccer, basketball, baseball, cricket, hockey, track and field, swimming, polo, handball, volleyball, rugby, sumo, judo, fencing, boxing, golf, car racing, laser tag, battlefield simulation etc. The devices according to the present invention can be used to detect the position of a ball, a bat, a sword, motions, etc., both in sports and in games, such as to monitor the game, support the referee or for judgment, specifically automatic judgment, of specific situations in sports, such as for judging whether a point or a goal actually was made.

Further, the devices according to the present invention may be used in the field of auto racing or car driver training or car safety training or the like to determine the position of a car or the track of a car, or the deviation from a previous track or an ideal track or the like.

The devices according to the present invention may further be used to support a practice of musical instruments, in particular remote lessons, for example lessons of string instruments, such as fiddles, violins, violas, celli, basses, harps, guitars, banjos, or ukuleles, keyboard instruments, such as pianos, organs, keyboards, harpsichords, harmoniums, or accordions, and/or percussion instruments, such as drums, timpani, marimbas, xylophones, vibraphones, bongos, congas, timbales, djembes or tablas.

The devices according to the present invention further may be used in rehabilitation and physiotherapy, in order to encourage training and/or in order to survey and correct movements. Therein, the devices according to the present invention may also be applied for distance diagnostics.

Further, the devices according to the present invention may be applied in the field of machine vision. Thus, one or more of the devices according to the present invention may be used e.g. as a passive controlling unit for autonomous driving and or working of robots. In combination with moving robots, the devices according to the present invention may allow for autonomous movement and/or autonomous detection of failures in parts. The devices according to the present invention may also be used for manufacturing and safety surveillance, such as in order to avoid accidents including but not limited to collisions between robots, production parts and living beings. In robotics, the safe and direct interaction of humans and robots is often an issue, as robots may severely injure humans when they are not recognized. Devices according to the present invention may help robots to position objects and humans better and faster and allow a safe interaction. Given the passive nature of the devices according to the present invention, the devices according to the present invention may be advantageous over active devices and/or may be used complementary to existing solutions like radar, ultrasound, 2D cameras, IR detection etc. One particular advantage of the devices according to the present invention is the low likelihood of signal interference. Therefore multiple sensors can work at the same time in the same environment, without the risk of signal interference. Thus, the devices according to the present invention generally may be useful in highly automated production environments like e.g. but not limited to automotive, mining, steel, etc. The devices according to the present invention can also be used for quality control in production, e.g. in combination with other sensors like 2-D imaging, radar, ultrasound, IR etc., such as for quality control or other purposes. Further, the devices according to the present invention may be used for assessment of surface quality, such as for surveying the surface evenness of a product or the adherence to specified dimensions, from the range of micrometers to the range of meters. Other quality control applications are feasible. In a manufacturing environment, the devices according to the present invention are especially useful for processing natural products such as food or wood, with a complex 3-dimensional structure to avoid large amounts of waste material. Further, devices according to the present invention may be used to monitor the filling level of tanks, silos etc. Further, devices according to the present invention may be used to inspect complex products for missing parts, incomplete parts, loose parts, low quality parts, or the like, such as in automatic optical inspection, such as of printed circuit boards, inspection of assemblies or sub-assemblies, verification of engineered components, engine part inspections, wood quality inspection, label inspections, inspection of medical devices, inspection of product orientations, packaging inspections, food pack inspections, or the like.

Further, the devices according to the present invention may be used in vehicles, trains, airplanes, ships, spacecraft and other traffic applications. Thus, besides the applications mentioned above in the context of traffic applications, passive tracking systems for aircraft, vehicles and the like may be named. The use of at least one device according to the present invention, such as at least one detector according to the present invention, for monitoring the speed and/or the direction of moving objects is feasible. Specifically, the tracking of fast moving objects on land, sea and in the air including space may be named. The at least one device according to the present invention, such as the at least one detector according to the present invention, specifically may be mounted on a still-standing and/or on a moving device. An output signal of the at least one device according to the present invention can be combined e.g. with a guiding mechanism for autonomous or guided movement of another object. Thus, applications for avoiding collisions or for enabling collisions between the tracked and the steered object are feasible. The devices according to the present invention are generally useful and advantageous due to a low calculation power required, an instant response and due to a passive nature of the detection system which is, generally, more difficult to detect and to disturb as compared to active systems, like e.g. radar. The devices according to the present invention are particularly useful but not limited to e.g. speed control and air traffic control devices. Further, the devices according to the present invention may be used in automated tolling systems for road charges.

The devices according to the present invention may, generally, be used in passive applications. Passive applications include guidance for ships in harbors or in dangerous areas, and for aircraft when landing or starting. Wherein, fixed, known active targets may be used for precise guidance. The same can be used for vehicles driving on dangerous but well defined routes, such as mining vehicles. Further, the devices according to the present invention may be used to detect rapidly approaching objects, such as cars, trains, flying objects, animals, or the like. Further, the devices according to the present invention can be used for detecting velocities or accelerations of objects, or to predict the movement of an object by tracking one or more of its position, speed, and/or acceleration depending on time.

Further, as outlined above, the devices according to the present invention may be used in the field of gaming. Thus, the devices according to the present invention can be passive for use with multiple objects of the same or of different size, color, shape, etc., such as for movement detection in combination with software that incorporates the movement into its content. In particular, applications are feasible in implementing movements into graphical output. Further, applications of the devices according to the present invention for giving commands are feasible, such as by using one or more of the devices according to the present invention for gesture or facial recognition. The devices according to the present invention may be combined with an active system in order to work under e.g. low light conditions or in other situations in which enhancement of the surrounding conditions is required. Additionally or alternatively, a combination of one or more devices according to the present invention with one or more IR or VIS light sources is possible. A combination of a detector according to the present invention with special devices is also possible, which can be distinguished easily by the system and its software, e.g. and not limited to, a special color, shape, relative position to other devices, speed of movement, light, frequency used to modulate light sources on the device, surface properties, material used, reflection properties, transparency degree, absorption characteristics, etc. The device can, amongst other possibilities, resemble a stick, a racquet, a club, a gun, a knife, a wheel, a ring, a steering wheel, a bottle, a ball, a glass, a vase, a spoon, a fork, a cube, a dice, a figure, a puppet, a teddy, a beaker, a pedal, a switch, a glove, jewelry, a musical instrument or an auxiliary device for playing a musical instrument, such as a plectrum, a drumstick or the like. Other options are feasible.

Further, the devices according to the present invention may be used to detect and or track objects that emit light by themselves, such as due to high temperature or further light emission processes. The light emitting part may be an exhaust stream or the like. Further, the devices according to the present invention may be used to track reflecting objects and analyze the rotation or orientation of these objects.

Further, the devices according to the present invention may generally be used in the field of building, construction and cartography. Thus, generally, one or more devices according to the present invention may be used in order to measure and/or monitor environmental areas, e.g. countryside or buildings. Therein, one or more devices according to the present invention may be combined with other methods and devices or can be used solely in order to monitor progress and accuracy of building projects, changing objects, houses, etc. The devices according to the present invention can be used for generating three-dimensional models of scanned environments, in order to construct maps of rooms, streets, houses, communities or landscapes, both from ground or air. Potential fields of application may be construction, cartography, real estate management, land surveying or the like. As an example, the devices according to the present invention may be used in vehicles capable of flight, such as drones or multicopters, in order to monitor buildings, chimneys, production sites, agricultural production environments such as fields, production plants, or landscapes, to support rescue operations, to support work in dangerous environments, to support fire brigades in a burning location indoors or outdoors, to find or monitor one or more persons, animals, or moving objects, or for entertainment purposes, such as a drone following and recording one or more persons doing sports such as skiing or cycling or the like, which could be realized by following a helmet, a mark, a beacon device, or the like. Devices according to the present invention could be used recognize obstacles, follow a predefined route, follow an edge, a pipe, a building, or the like, or to record a global or local map of the environment. Further, devices according to the present invention could be used for indoor or outdoor localization and positioning of drones, for stabilizing the height of a drone indoors where barometric pressure sensors are not accurate enough, or for the interaction of multiple drones such as concertized movements of several drones or recharging or refueling in the air or the like.

Further, the devices according to the present invention may be used within an interconnecting network of home appliances such as CHAIN (Cedec Home Appliances Interoperating Network) to interconnect, automate, and control basic appliance-related services in a home, e.g. energy or load management, remote diagnostics, pet related appliances, child related appliances, child surveillance, appliances related surveillance, support or service to elderly or ill persons, home security and/or surveillance, remote control of appliance operation, and automatic maintenance support. Further, the devices according to the present invention may be used in heating or cooling systems such as an air-conditioning system, to locate which part of the room should be brought to a certain temperature or humidity, especially depending on the location of one or more persons. Further, the devices according to the present invention may be used in domestic robots, such as service or autonomous robots which may be used for household chores.

The devices according to the present invention may be used for a number of different purposes, such as to avoid collisions or to map the environment, but also to identify a user, to personalize the robot's performance for a given user, for security purposes, or for gesture or facial recognition. As an example, the devices according to the present invention may be used in robotic vacuum cleaners, floor-washing robots, dry-sweeping robots, ironing robots for ironing clothes, animal litter robots, such as cat litter robots, security robots that detect intruders, robotic lawn mowers, automated pool cleaners, rain gutter cleaning robots, window washing robots, toy robots, telepresence robots, social robots providing company to less mobile people, or robots translating and speech to sign language or sign language to speech. In the context of less mobile people, such as elderly persons, household robots with the devices according to the present invention may be used for picking up objects, transporting objects, and interacting with the objects and the user in a safe way. Further the devices according to the present invention may be used in robots operating with hazardous materials or objects or in dangerous environments. As a non-limiting example, the devices according to the present invention may be used in robots or unmanned remote-controlled vehicles to operate with hazardous materials such as chemicals or radioactive materials especially after disasters, or with other hazardous or potentially hazardous objects such as mines, unexploded arms, or the like, or to operate in or to investigate insecure environments such as near burning objects or post disaster areas, or for manned or unmanned rescue operations in the air, in the sea, underground, or the like.

Further, the devices according to the present invention may be used in household, mobile or entertainment devices, such as a refrigerator, a microwave, a washing machine, a window blind or shutter, a household alarm, an air condition devices, a heating device, a television, an audio device, a smart watch, a mobile phone, a phone, a dishwasher, a stove or the like, to detect the presence of a person, to monitor the contents or function of the device, or to interact with the person and/or share information about the person with further household, mobile or entertainment devices. Herein, the devices according to the present invention may be used to support elderly or disabled persons, blind persons, or persons with limited vision abilities, such as in household chores or at work such as in devices for holding, carrying, or picking objects, or in a safety system with optical and/or acoustical signals adapted for signaling obstacles in the environment.

The devices according to the present invention may further be used in agriculture, for example to detect and sort out vermin, weeds, and/or infected crop plants, fully or in parts, wherein crop plants may be infected by fungus or insects. Further, for harvesting crops, the devices according to the present invention may be used to detect animals, such as deer, which may otherwise be harmed by harvesting devices. Further, the devices according to the present invention may be used to monitor the growth of plants in a field or greenhouse, in particular to adjust the amount of water or fertilizer or crop protection products for a given region in the field or greenhouse or even for a given plant. Further, in agricultural biotechnology, the devices according to the present invention may be used to monitor the size and shape of plants.

Further, the devices according to the present invention may be combined with sensors to detect chemicals or pollutants, electronic nose chips, microbe sensor chips to detect bacteria or viruses or the like, Geiger counters, tactile sensors, heat sensors, or the like. This may for example be used in constructing smart robots which are configured for handling dangerous or difficult tasks, such as in treating highly infectious patients, handling or removing highly dangerous substances, cleaning highly polluted areas, such as highly radioactive areas or chemical spills, or for pest control in agriculture.

One or more devices according to the present invention can further be used for scanning of objects, such as in combination with CAD or similar software, such as for additive manufacturing and/or 3D printing. Therein, use may be made of the high dimensional accuracy of the devices according to the present invention, e.g. in x-, y- or z- direction or in any arbitrary combination of these directions, such as simultaneously. In this regard, determining a distance of an illuminated spot on a surface which may provide reflected or diffusely scattered light from the detector may be performed virtually independent of the distance of the light source from the illuminated spot. This property of the present invention is in direct contrast to known methods, such as triangulation or such as time-of-flight (TOF) methods, wherein the distance between the light source and the illuminated spot must be known a priori or calculated a posteriori in order to be able to determine the distance between the detector and the illuminated spot. In contrast hereto, for the detector according to the present invention is may be sufficient that the spot is adequately illuminated. Further, the devices according to the present invention may be used for scanning reflective surfaces, such of metal surfaces, independent whether they may comprise a solid or a liquid surface. Further, the devices according to the present invention may be used in inspections and maintenance, such as pipeline inspection gauges. Further, in a production environment, the devices according to the present invention may be used to work with objects of a badly defined shape such as naturally grown objects, such as sorting vegetables or other natural products by shape or size or cutting products such as meat or objects that are manufactured with a precision that is lower than the precision needed for a processing step.

Further, the devices according to the present invention may be used in local navigation systems to allow autonomously or partially autonomously moving vehicles or multicopters or the like through an indoor or outdoor space. A non-limiting example may comprise vehicles moving through an automated storage for picking up objects and placing them at a different location. Indoor navigation may further be used in shopping malls, retail stores, museums, airports, or train stations, to track the location of mobile goods, mobile devices, baggage, customers or employees, or to supply users with a location specific information, such as the current position on a map, or information on goods sold, or the like.

Further, the devices according to the present invention may be used to ensure safe driving of motorcycles, such as driving assistance for motorcycles by monitoring speed, inclination, upcoming obstacles, unevenness of the road, or curves or the like. Further, the devices according to the present invention may be used in trains or trams to avoid collisions.

Further, the devices according to the present invention may be used in handheld devices, such as for scanning packaging or parcels to optimize a logistics process. Further, the devices according to the present invention may be used in further handheld devices such as personal shopping devices, RFID-readers, handheld devices for use in hospitals or health environments such as for medical use or to obtain, exchange or record patient or patient health related information, smart badges for retail or health environments, or the like.

As outlined above, the devices according to the present invention may further be used in manufacturing, quality control or identification applications, such as in product identification or size identification (such as for finding an optimal place or package, for reducing waste etc.). Further, the devices according to the present invention may be used in logistics applications. Thus, the devices according to the present invention may be used for optimized loading or packing containers or vehicles. Further, the devices according to the present invention may be used for monitoring or controlling of surface damages in the field of manufacturing, for monitoring or controlling rental objects such as rental vehicles, and/or for insurance applications, such as for assessment of damages. Further, the devices according to the present invention may be used for identifying a size of material, object or tools, such as for optimal material handling, especially in combination with robots. Further, the devices according to the present invention may be used for process control in production, e.g. for observing filling level of tanks. Further, the devices according to the present invention may be used for maintenance of production assets like, but not limited to, tanks, pipes, reactors, tools etc. Further, the devices according to the present invention may be used for analyzing 3D-quality marks. Further, the devices according to the present invention may be used in manufacturing tailor-made goods such as tooth inlays, dental braces, prosthesis, clothes or the like. The devices according to the present invention may also be combined with one or more 3D-printers for rapid prototyping, 3D-copying or the like. Further, the devices according to the present invention may be used for detecting the shape of one or more articles, such as for anti-product piracy and for anti-counterfeiting purposes.

Further, the devices according to the present invention may be used in the context of gesture recognition. In this context, gesture recognition in combination with devices according to the present invention may, in particular, be used as a human-machine interface for transmitting information via motion of a body, of body parts or of objects to a machine. Herein, the information may, preferably, be transmitted via a motion of hands or hand parts, such as fingers, in particular, by pointing at objects, applying sign language, such as for deaf people, making signs for numbers, approval, disapproval, or the like, by waving the hand, such as when asking someone to approach, to leave, or to greet a person, to press an object, to take an object, or, in the field of sports or music, in a hand or finger exercise, such as a warm-up exercise. Further, the information may be transmitted by motion of arms or legs, such as rotating, kicking, grabbing, twisting, rotating, scrolling, browsing, pushing, bending, punching, shaking, arms, legs, both arms, or both legs, or a combination of arms and legs, such as for a purpose of sports or music, such as for entertainment, exercise, or training function of a machine. Further, the information may be transmitted by motion of the whole body or major parts thereof, such as jumping, rotating, or making complex signs, such as sign language used at airports or by traffic police in order to transmit information, such as "turn right", "turn left", "proceed", "slow down", "stop", or "stop engines", or by pretending to swim, to dive, to run, to shoot, or the like, or by making complex motions or body positions such as in yoga, pilates, judo, karate, dancing, or ballet. Further, the information may be transmitted by using a real or mock-up device for controlling a virtual device corresponding to the mock-up device, such as using a mock-up guitar for controlling a virtual guitar function in a computer program, using a real guitar for controlling a virtual guitar function in a computer program, using a real or a mock-up book for reading an e-book or moving pages or browsing through in a virtual document, using a real or mock-up pen for drawing in a computer program, or the like. Further, the transmission of the information may be coupled to a feedback to the user, such as a sound, a vibration, or a motion.

In the context of music and/or instruments, devices according to the present invention in combination with gesture recognition may be used for exercising purposes, control of instruments, recording of instruments, playing or recording of music via use of a mock-up instrument or by only pretending to have a instrument present such as playing air guitar, such as to avoid noise or make recordings, or, for conducting of a virtual orchestra, ensemble, band, big band, choir, or the like, for practicing, exercising, recording or entertainment purposes or the like.

Further, in the context of safety and surveillance, devices according to the present invention in combination with gesture recognition may be used to recognize motion profiles of persons, such as recognizing a person by the way of walking or moving the body, or to use hand signs or movements or signs or movements of body parts or the whole body as access or identification control such as a personal identification sign or a personal identification movement.

Further, in the context of smart home applications or internet of things, devices according to the present invention in combination with gesture recognition may be used for central or non-central control of household devices which may be part of an interconnecting network of home appliances and/or household devices, such as refrigerators, central heating, air condition, microwave ovens, ice cube makers, or water boilers, or entertainment devices, such as television sets, smart phones, game consoles, video recorders, DVD players, personal computers, laptops, tablets, or combinations thereof, or a combination of household devices and entertainment devices.

Further, in the context of virtual reality or of augmented reality, devices according to the present invention in combination with gesture recognition may be used to control movements or function of the virtual reality application or of the augmented reality application, such as playing or controlling a game using signs, gestures, body movements or body part movements or the like, moving through a virtual world, manipulating virtual objects, practicing, exercising or playing sports, arts, crafts, music or games using virtual objects such as a ball, chess figures, go stones, instruments, tools, brushes.

Further, in the context of medicine, devices according to the present invention in combination with gesture recognition may be used to support rehabilitation training, remote diagnostics, or to monitor or survey surgery or treatment, to overlay and display medical images with positions of medical devices, or to overlay display prerecorded medical images such as from magnetic resonance tomography or x-ray or the like with images from endoscopes or ultra sound or the like that are recorded during an surgery or treatment.

Further, in the context of manufacturing and process automation, devices according to the present invention in combination with gesture recognition may be used to control, teach, or program robots, drones, unmanned autonomous vehicles, service robots, movable objects, or the like, such as for programming, controlling, manufacturing, manipulating, repairing, or teaching purposes, or for remote manipulating of objects or areas, such as for safety reasons, or for maintenance purposes.

Further, in the context of business intelligence metrics, devices according to the present invention in combination with gesture recognition may be used for people counting, surveying customer movements, areas where customers spend time, objects, customers test, take, probe, or the like.

Further, devices according to the present invention may be used in the context of do-it-yourself or professional tools, especially electric or motor driven tools or power tools, such as drilling machines, saws, chisels, hammers, wrenches, staple guns, disc cutters, metals shears and nibblers, angle grinders, die grinders, drills, hammer drills, heat guns, wrenches, sanders, engraivers, nailers, jig saws, buiscuit joiners, wood routers, planers, polishers, tile cutters, washers, rollers, wall chasers, lathes, impact drivers, jointers, paint rollers, spray guns, morticers, or welders, in particular, to support precision in manufacturing, keeping a minimum or maximum distance, or for safety measures.

Further, the devices according to the present invention may be used to aid visually impaired persons. Further, devices according to the present invention may be used in touch screen such as to avoid direct context such as for hygienic reasons, which may be used in retail environments, in medical applications, in production environments, or the like. Further, devices according to the present invention may be used in agricultural production environments such as in stable cleaning robots, egg collecting machines, milking machines, harvesting machines, farm machinery, harvesters, forwarders, combine harvesters, tractors, cultivators, ploughs, destoners, harrows, strip tills, broadcast seeders, planters such as potato planters, manure spreaders, sprayers, sprinkler systems, swathers, balers, loaders, forklifts, mowers, or the like.

Further, devices according to the present invention may be used for selection and/or adaption of clothing, shoes, glasses, hats, prosthesis, dental braces, for persons or animals with limited communication skills or possibilities, such as children or impaired persons, or the like. Further, devices according to the present invention may be used in the context of warehouses, logistics, distribution, shipping, loading, unloading, smart manufacturing, industry 4.0, or the like. Further, in a manufacturing context, devices according to the present invention may be used in the context of processing, dispensing, bending, material handling, or the like.

The devices according to the present invention may be combined with one or more other types of measurement devices. Thus, the devices according to the present invention may be combined with one or more other types of sensors or detectors, such as a time of flight (TOF) detector, a stereo camera, a lightfield camera, a lidar, a radar, a sonar, an ultrasonic detector, or interferometry. When combining devices according to the present invention with one or more other types of sensors or detectors, the devices according to the present invention and the at least one further sensor or detector may be designed as independent devices, with the devices according to the present invention being separate from the at least one further sensor or detector. Alternatively, the devices according to the present invention and the at least one further sensor or detector may fully or partially be integrated or designed as a single device.

Thus, as a non-limiting example, the devices according to the present invention may further comprise a stereo camera. As used herein, a stereo camera is a camera which is designed for capturing images of a scene or an object from at least two different perspectives. Thus, the devices according to the present invention may be combined with at least one stereo camera.

The stereo camera's functionality is generally known in the art, since stereo cameras generally are known to the skilled person. The combination with the devices according to the present invention may provide additional distance information. Thus, the devices according to the present invention may be adapted, in addition to the stereo camera's information, to provide at least one item of information on a longitudinal position of at least one object within a scene captured by the stereo camera. Information provided by the stereo camera, such as distance information obtained by evaluating triangulation measurements performed by using the stereo camera, may be calibrated and/or validated by using the devices according to the present invention. Thus, as an example, the stereo camera may be used to provide at least one first item of information on the longitudinal position of the at least one object, such as by using triangulation measurements, and the devices according to the present invention may be used to provide at least one second item of information on the longitudinal position of the at least one object. The first item of information and the second item of information may be used to improve accuracy of the measurements. Thus, the first item of information may be used for calibrating the second item of information or vice a versa. Consequently, the devices according to the present invention, as an example, may form a stereo camera system, having the stereo camera and the devices according to the present invention, wherein the stereo camera system is adapted to calibrate the information provided by the stereo camera by using the information provided by devices according to the present invention.

Consequently, additionally or alternatively, the devices according to the present invention may be adapted to use the second item of information, provided by the devices according to the present invention, for correcting the first item of information, provided by the stereo camera. Additionally or alternatively, the devices according to the present invention may be adapted to use the second item of information, provided by the devices according to the present invention, for correcting optical distortion of the stereo camera. Further, the devices according to the present invention may adapted to calculate stereo information provided by the stereo camera, and the second item of information provided by devices according to the present invention may be used for speeding up the calculation of the stereo information.

As an example, the devices according to the present invention may be adapted to use at least one virtual or real object within a scene captured by the devices according to the present invention for calibrating the stereo camera. As an example, one or more objects and/or areas and/or spots may be used for calibration. As an example, the distance of at least one object or spot may be determined by using the devices according to the present invention, and distance information provided by the stereo camera may be calibrated by using this distance is determined by using the devices according to the present invention. For instance, at least one active light spot of the devices according to the present invention may be used as a calibration point for the stereo camera. The active light spot, as an example, may move freely in the picture.

The devices according to the present invention may be adapted to continuously or discontinuously calibrate the stereo camera by using information provided by the active distance sensor. Thus, as an example, the calibration may take place at regular intervals, continuously or occasionally.

Further, typical stereo cameras exhibit measurement errors or uncertainties which are dependent on the distance of the object. This measurement error may be reduced when combined with information provided by the devices according to the present invention.

Combinations of stereo cameras with other types of distance sensors are generally known in the art. Thus, in D. Scaramuzza et al., IEEE/RSJ International Conference on Intelligent Robots and Systems, IROS 2007, pp. 4164-4169, 2007, an extrinsic self-calibration of a camera and a 3D laser range finder from natural scenes is disclosed. Similarly, in D. Klimentjew et al., IEEE Conference on Multisensor Fusion and Integration for Intelligent Systems (MFI), pages 236-241, 2010, a multi sensor fusion of camera and 3D laser range finder for object recognition is disclosed. As the skilled person will recognize, the laser range finder in these setups known in the art may simply be replaced or complemented by at least one device according to the present invention, without altering the methods and advantages disclosed by these prior art documents. For potential setups of the stereo camera, reference may be made to these prior art documents. Still, other setups and embodiments of the at least one optional stereo camera are feasible.

Preferably, for further potential details of the optical detector, the method, the human-machine interface, the entertainment device, the tracking system, the camera and the various uses of the detector, in particular with regard to the transfer device, the transversal optical sensors, the evaluation device and, if applicable, to the longitudinal optical sensor, the modulation device, the illumination source and the imaging device, specifically with respect to the potential materials, setups and further details, reference may be made to one or more of WO 2012/110924 A1, US 2012/206336 A1, WO 2014/097181 A1, US 2014/291480 A1, and PCT patent application No. PCT/EP2016/051817, filed January 28, 2016, the full content of all of which is herewith included by reference.

Further, the devices according to the present invention may be used for infra-red detection applications, heat-detection applications, thermometer applications, heat-seeking applications, flame-detection applications, fire-detection applications, smoke-detection applications, temperature sensing applications, spectroscopy applications, or the like. Further, devices according to the present invention may be used in photocopy or xerography applications. Further, devices according to the present invention may be used to monitor exhaust gas, to monitor combustion processes, to monitor pollution, to monitor industrial processes, to monitor chemical processes, to monitor food processing processes, to assess water quality, to assess air quality, or the like. Further, devices according to the present invention may be used for quality control, temperature control, motion control, exhaust control, gas sensing, gas analytics, motion sensing, chemical sensing, or the like.

The above-described optical detector, the method, the human-machine interface and the entertainment device, which comprises at least one of the detectors, and also the proposed uses have considerable advantages over the prior art. Thus, generally, a simple and, still, efficient detector for an accurate determining a position of at least one object in space, specifically with regard to a depth or both to the depth and a width of the at least one object may be provided. Further, the detectors according to the present invention may be particularly sensitive over at least a partition of the IR spectral range, thus providing efficient, reliable and large-area position sensitive devices for the infrared.

Summarizing, in the context of the present invention, the following embodiments are regarded as particularly preferred:

Embodiment 1: A photodetector compensating circuit, comprising:

- at least one photoconductor having an electrical conductivity dependent on an illumination of a light-sensitive region of the photoconductor;
- at least one transimpedance amplifier, wherein the transimpedance amplifier comprises at least one inverting operational amplifier and one or both of at least one feedback resistor having a resistance $R_F$ or at least one feedback capacitor having a capacity $C_F$.

Embodiment 2: The photodetector compensating circuit according to the preceding embodiment, wherein the photodetector compensating circuit is adapted to compensate at least one dependence of at least one signal of the photoconductor on at least one parameter selected from the group consisting of: humidity, exposure to contaminants, illumination history, and temperature.

Embodiment 3: The photodetector compensating circuit according to the preceding embodiment, wherein the photoconductor has a dark resistance $R_D$, wherein at least one output signal after the transimpedance amplifier is independent of $R_D$.

Embodiment 4: The photodetector compensating circuit according to the preceding embodiment, wherein the output signal is proportional to $\Delta R_D / R_D^2$, wherein $\Delta R_D$ is a signal amplitude, wherein the signal amplitude is proportional to $R_D^2$.

Embodiment 5: The photodetector compensating circuit according to any one of the preceding embodiments, wherein the feedback resistor and the feedback capacitor are arranged in parallel.

Embodiment 6: The photodetector compensating circuit according to any one of the preceding embodiments, wherein the photodetector compensating circuit comprises at least one voltage input to which at least one input voltage signal is applicable across the photoconductor.

Embodiment 7: The photodetector compensating circuit according to any one of the preceding embodiments, wherein the photodetector compensating circuit comprises at least one voltage source adapted to apply the input voltage signal across the photoconductor.

Embodiment 8: The photodetector compensating circuit according to any one of the preceding embodiments, wherein the photodetector compensating circuit comprises at least one voltage output at which at least one output signal is determinable.

Embodiment 9: The photodetector compensating circuit according to any one of the preceding embodiments, wherein the light-sensitive region comprises at least one photoconductive material selected from the group consisting of lead sulfide (PbS); lead selenide (PbSe); mercury cadmium telluride (HgCdTe); cadmium sulfide (CdS); cadmium selenide (CdSe); indium antimonide (InSb); indium arsenide (InAs); indium gallium arsenide (InGaAs); extrinsic semiconductors, organic semiconductors.

Embodiment 10: The photodetector compensating circuit according to any one of the preceding embodiments, wherein the dark resistance of the photoconductor is between 1 Ω and 10 MΩ.

Embodiment 11: The photodetector compensating circuit according to the preceding embodiment, wherein the dark resistance of the photoconductor is between 5 Ω and 5 MΩ. Embodiment 12: The photodetector compensating circuit according to the preceding embodiment, wherein the dark resistance of the photoconductor is between 50 Ω and 2.5 MΩ.

Embodiment 13: A detector comprising at least one photodetector compensating circuit according to any one of the preceding embodiments, wherein the photodetector compensating circuit comprises:

at least one photoconductor having an electrical conductivity dependent on an illumination of a light-sensitive region of the photoconductor;
at least one transimpedance amplifier, wherein the transimpedance amplifier comprises at least one inverting operational amplifier and one or both of at least one feedback resistor having a resistance $R_F$ or at least one feedback capacitor having a capacity $C_F$.

Embodiment 14: The detector according to the preceding embodiment, wherein the detector comprises at least one evaluation device adapted to determine at least one voltage output signal at at least one voltage output.

Embodiment 15: The detector according to any one of the two preceding embodiments, wherein the detector comprises at least one illumination source.

Embodiment 16: A method for optical detection of at least one illumination of at least one photodetector, wherein at least one photoconductor is illuminated by at least one light beam, wherein the method comprises using at least one detector according to any one of the preceding embodiments referring to a detector.

Embodiment 17: Use of a photodetector compensating circuit according to any one of the preceding embodiments referring to a photodetector compensating circuit for a purpose of compensating at least one dependence of at least one signal of at least one photoconductor on at least one parameter selected from the group consisting of: humidity, exposure to contaminants, illumination history, and temperature.

Brief description of the figures

Further optional details and features of the invention are evident from the description of preferred exemplary embodiments which follows in conjunction with the dependent claims. In this context, the particular features may be implemented alone or with features in combination. The invention is not restricted to the exemplary embodiments. The exemplary embodiments are shown schematically in the figures. Identical reference numerals in the individual figures refer to identical elements or elements with identical function, or elements which correspond to one another with regard to their functions.
Specifically, in the figures:

Figure 1   shows an exemplary embodiment of a photodetector compensating circuit;

Figure 2   shows dependence of signal amplitude on dark resistance of the photoconductor;

Figure 3   shows an exemplary embodiment of a detector according to the present invention comprising the at least one photodetector compensating circuit; and

Figure 4   shows experimental results of a comparison of a voltage divider and a transimpedance amplifier according to the present invention.

Exemplary embodiments

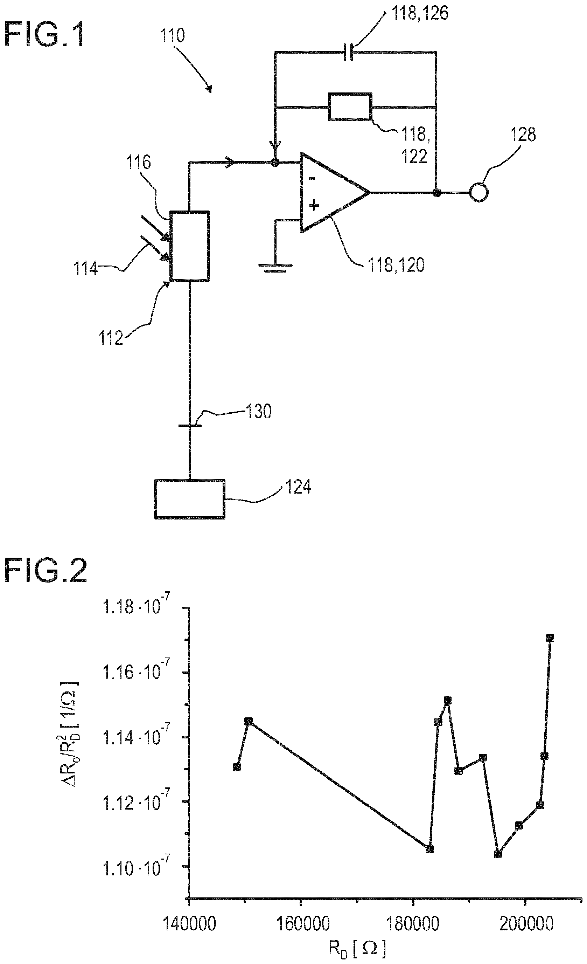

Figure 1 illustrates, in a highly schematic fashion, an exemplary embodiment of a photodetector compensating circuit 110 according to the present invention. The photodetector compensating circuit 110 comprises at least one photoconductor 112 having an electrical conductivity dependent on an illumination 114 of a light-sensitive region 116 of the photoconductor 112.
The light-sensitive region 116 may comprise at least one photoconductive material. The light-sensitive region 116 may comprise at least one photoconductive material selected from the group consisting of lead sulfide (PbS); lead selenide (PbSe); mercury cadmium telluride (HgCdTe); cadmium sulfide (CdS); cadmium selenide (CdSe); indium antimonide (InSb); indium arsenide (InAs); indium gallium arsenide (InGaAs); extrinsic semiconductors, e.g. doped Ge, Si, GaAs. However, other materials may be feasible.
The photodetector compensating circuit 110 comprises at least one transimpedance amplifier 118. The transimpedance amplifier 118 may be adapted to amplify the current output signal of the photoconductor 112 to a usable voltage signal. The photodetector compensating circuit 110 may comprise at least one voltage source 124 adapted to apply the input voltage signal across the photoconductor 112. The transimpedance amplifier 118 may be adapted to generate at least one output signal, in particular a voltage change of the input voltage signal, dependent on the resistance of the photoconductor 112.
The transimpedance amplifier 118 comprises at least one inverting operational amplifier 120 and at least one feedback resistor 122 having a resistance $R_F$. The inverting operational amplifier 120 may be adapted to change an output voltage in an opposite direction to an input voltage. The inverting operational amplifier 120 may comprise an inverting input port (-), a non-inverting input port (+) and an output port. The photoconductor 112 may directly or indirectly, i.e. via at least one further element, be electrically connected to the inverting port. The positive non-inverting input may be connected to a common ground or a zero voltage terminal and may be at zero volts or ground. The feedback resistor 122 may be a large valued feedback resistor, for example the resistance of the feedback resistor 122 may be between 5 kΩ and 5 MΩ, preferably between 50 kΩ and 2MΩ. A gain of the transimpedance amplifer 118 may be specified and/or set by the feedback resistor 122. A first port of the feedback resistor 122 may directly or indirectly be electrically connected to the inverting port and wherein a second port of the feedback resistor 122 may directly or indirectly be electrically connected to the output port. The transimpedance amplifier 118 may further comprise at least one further resistor which may directly or indirectly be coupled, in a serial manner, to the output port.

In Figure 1, the transimpedance amplifier 118 comprises at least one feedback capacitor 126 having a capacity $C_F$. The feedback resistor 122 and the feedback capacitor 126 may be arranged in parallel. The feedback capacitor 126 may be adapted to reduce gain peaking in order to achieve a flatter response. A first port of the feedback capacitor 126 may directly or indirectly be electrically connected to the inverting port and wherein a second port of the feedback capacitor 126 may directly or indirectly be electrically connected to the output port.

The photodetector compensating circuit 110 may be adapted to compensate at least one dependence of at least one signal of the photoconductor 112 on at least one parameter selected from the group consisting of: humidity, exposure to contaminants, illumination history, and temperature. The photoconductor 112 may have a dark resistance $R_D$. The dark resistance may be dependent on and/or may change due to influences of the parameters selected from the group consisting of: humidity, exposure to contaminants, illumination history, and temperature. Surprisingly, it was found that using transimpedance amplifiers 118 for readout of the photoconductor 112 may result in an output signal independent of the dark resistance and, thus, for example in an improved signal strength.

The dark resistance of the photoconductor 112 may be or may have a value between 1 and 10 MΩ. Preferably, the dark resistance of the photoconductor 112 may be between 5 and 5 MΩ, and most preferably the dark resistance of the photoconductor 112 may be between 50 and 2.5 MΩ.

At least one output signal, for example a signal current, after the transimpedance amplifier 118, in particular at the output port of the inverting operational amplifier 120, may be independent of $R_D$. The photodetector compensating circuit 110 may comprise at least one voltage output 128 at which at least one output signal is determinable. The voltage output 128 may be connected to the output port of the inverting operational amplifier. The output signal $\Delta U_{out}$ of the transimpedance amplifier may be

$$\Delta U_{out} = -U_{in}\frac{R_F}{R_D^2}\Delta R_D,$$

wherein $U_{in}$ is an input voltage signal and $\Delta R_D$ is a signal amplitude. Accordingly, the output signal may be proportional to $\Delta R_D/R_D^2$. Figure 2 shows experimental results of a dependence of signal amplitude $\Delta R_D/R_D^2$ in 1/Ω on the dark resistance $R_D$ of the photoconductor 112 in Ω. The photoconductors 112 were measured with a multimeter and different humidity levels applied under dark and illuminated condition, in particular with a wavelength of 850 nm by an LED, T= 300K. Surprisingly, it was found that the signal amplitude is proportional to $R_D^2$. Thus, the dependencies of the output signal $\Delta U_{out}$ on $R_D$ may cancel out. The output signal may be independent of variations caused by the parameters, e.g. one or more of: humidity, exposure to contaminants, illumination history, and temperature. No additional referencing may be required. In addition, using a transimpedance amplifier 118 may allow using a plurality photoconductors 112 with very different dark resistances in the same circuit without a need to change electronic parts. Using a transimpedance amplifier 118 may allow encapsulation and light shielding to become less important, such that cheaper packaging and system integrating solutions may be possible. Furthermore, use of photoconductors 112 with low dark resistance may be possible.

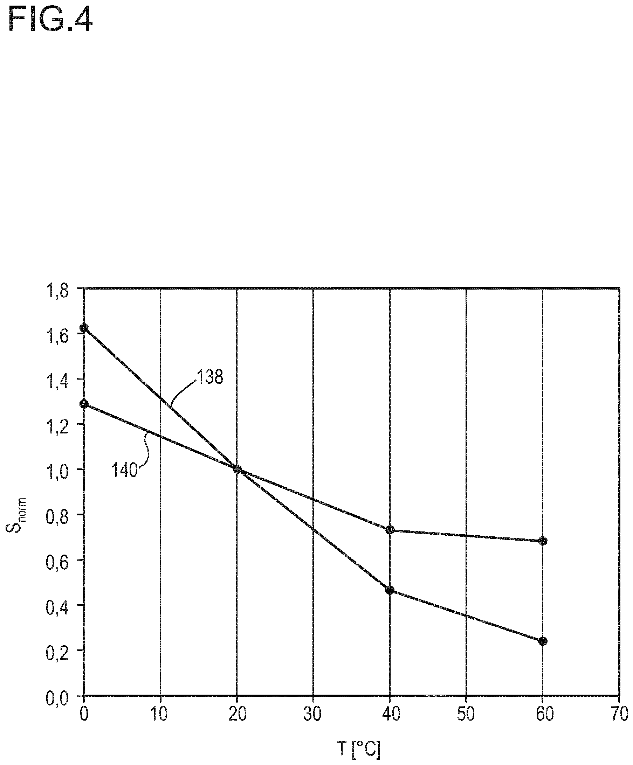

In Figure 4, experimental results of a comparison of a voltage divider and a transimpedance amplifier according to the present invention are depicted. The compensating effect is shown in a setup with a photoconductor 112 in a temperature controlled chamber. The photoconductor 112 was illuminated with a 850 nm LED with a frequency of 375 Hz. The output signal was measured using a voltage divider circuit, curve 138, and the transimpedance amplifier 118, curve 140, for different temperatures T. Figure 4 shows dependency of normalized signal $S_{norm}$ of the temperature T in °C. Surprisingly, a change in signal is significantly reduced when using the photodetector compensating circuit 110 comprising the transimpedance amplifier118, thus proofing the compensating effect.

The photodetector compensating circuit 110 may comprise at least one voltage input 130 to which at least one input voltage signal is applicable across the photoconductor 112. As outlined above, the photodetector compensating circuit 110 may comprise the at least one voltage source 124 adapted to apply the input voltage signal across the photoconductor. Specifically, the voltage signal may be a direct voltage signal. The input voltage signal may be between 0.001 V and 5000 V. Preferably, the input voltage signal may be between 1 V and 500 V and most preferably the input voltage signal may be between 5 V and 50 V. For this purpose, the voltage source 124 may be connected to at least one input port of the photoconductor 112.

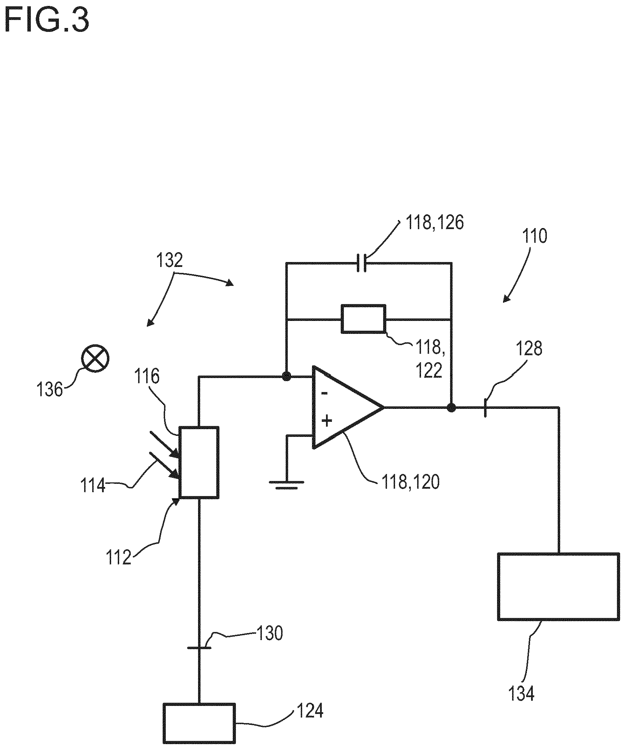

Figure 3 shows an exemplary embodiment of a detector 132 comprising a photodetector compensation circuit 110, such as the photodetector compensating circuit 110 as disclosed in the embodiment shown in Figure 1. The detector 132 furthermore comprises at least one evaluation device 134 adapted to determine the voltage output signal at the voltage output 128. For example, the voltage output 128 may provide a connection point for the evaluation device 134. The evaluation device 134 may be or may comprise one or more integrated circuits, such as one or more application-specific integrated circuits (ASICs), and/or one or more data processing devices, such as one or more computers, preferably one or more microcomputers and/or microcontrollers. Additional components may be comprised, such as one or more preprocessing devices and/or data acquisition devices, such as one or more devices for receiving and/or preprocessing of the voltage signal, such as one or more AD-converters and/or one or more filters. Further, the evaluation device 134 may comprise one or more data storage devices. Further, as outlined above, the evaluation device 134 may comprise one or more interfaces, such as one or more wireless interfaces and/or one or more wire-bound interfaces. The evaluation device 134 may further comprise one or more additional components, such as one or more electronic hardware components and/or one or more software components, such as one or more measurement units and/or one or more evaluation units and/or one or more controlling units (not depicted here). The evaluation device 134 may particularly comprise at least one data processing device, in particular an electronic data processing device, which can be designed to determine at least one output voltage signal. The evaluation device 134 may comprise at least one measurement device adapted to measure the at least one output voltage signal, e.g. at least one voltmeter.

The detector 132 may comprise at least one illumination source 136. The illumination source 136 can, for example, be or comprise an ambient light source and/or may be or may comprise an artificial illumination source. By way of example, the illumination source 136 may comprise at least one infrared emitter and/or at least one emitter for visible light and/or at least one emitter for ultraviolet light. By way of example, the illumination source 136 may comprise at least one light emitting diode and/or at least one laser diode. The illumination source 136 can comprise, in particular, one or a plurality of the following illumination sources: a laser, in particular a laser diode, although in principle, alternatively or additionally, other types of lasers can also be used; a light emitting diode; an incandescent lamp; a neon light; a flame source; an organic light source, in particular an organic light emitting diode; a structured light source. Alternatively or additionally, other illumination sources 136 can also be used. The illumination source 136 generally may be adapted to emit light in at least one of: the ultraviolet spectral range, the infrared spectral range. Most preferably, the at least one illumination source 142 is adapted to emit light in the visible spectral range, preferably in the range of 500 nm to 780 nm, most preferably at 650 nm to 750 nm or at 690 nm to 700 nm.

The evaluation device 134 can also be designed to completely or partly control the at least one illumination source 134 and/or to control the at least one voltage source 124.

List of reference numbers

[0137]

| | |
|---|---|
| 110 | photodetector compensating circuit |
| 112 | photoconductor |
| 114 | illumination |
| 116 | light-sensitive region |
| 118 | transimpedance amplifier |
| 120 | inverting operational amplifier |
| 122 | feedback resistor |
| 124 | voltage source |
| 126 | feedback capacitor |
| 128 | voltage output |
| 130 | voltage input |
| 132 | detector |
| 134 | evaluation device |
| 136 | illumination source |
| 138 | curve |
| 140 | curve |

**Claims**

1. A photodetector compensating circuit (110), comprising:

   - at least one photoconductor (112) having an electrical conductivity dependent on an illumination (114) of a light-sensitive region (116) of the photoconductor (112);
   - at least one transimpedance amplifier (118), wherein the transimpedance amplifier (118) comprises at least one inverting operational amplifier (120) and one or both of at least one feedback resistor (122) having a resistance $R_F$ or at least one feedback capacitor (126) having a capacity $C_F$.

2. The photodetector compensating circuit (110) according to the preceding claim, wherein the photodetector compensating circuit (110) is adapted to compensate at least one dependence of at least one signal of the photoconductor (112) on at least one parameter selected from the group consisting of: humidity, exposure to contaminants, illumination history, and temperature.

3. The photodetector compensating circuit (110) according to the preceding claim, wherein the photoconductor (112) has a dark resistance $R_D$, wherein at least one output signal after the transimpedance amplifier (118) is independent of $R_D$.

4. The photodetector compensating circuit (110) according to the preceding claim, wherein the output signal is proportional to $\Delta R_D / R_D^2$, wherein $\Delta R_D$ is a signal amplitude, wherein the signal amplitude is proportional to $R_D^2$.

5. The photodetector compensating circuit (110) according to any one of the preceding claims, wherein the feedback resistor (122) and the feedback capacitor (126) are arranged in parallel.

6. The photodetector compensating circuit (110) according to any one of the preceding claims, wherein the photodetector compensating circuit (110) comprises at least one voltage input (130) to which at least one input voltage signal is applicable across the photoconductor (112).

7. The photodetector compensating circuit (110) according to any one of the preceding claims, wherein the photodetector compensating circuit (110) comprises at least one voltage source (124) adapted to apply the input voltage signal across the photoconductor (124).

8. The photodetector compensating circuit (110) according to any one of the preceding claims, wherein the photodetector compensating circuit (110) comprises at least one voltage output (128) at which at least one output signal is determinable.

9. The photodetector compensating circuit according (110) to any one of the preceding claims, wherein the light-sensitive region (116) comprises at least one photoconductive material selected from the group consisting of lead sulfide (PbS); lead selenide (PbSe); mercury cadmium telluride (HgCdTe); cadmium sulfide (CdS); cadmium selenide (CdSe); indium antimonide (InSb); indium arsenide (InAs); indium gallium arsenide (InGaAs); extrinsic semiconductors, organic semiconductors.

10. A detector (132) comprising at least one photodetector compensating circuit (110) according to any one of the preceding claims, wherein the photodetector compensating circuit comprises:

    - at least one photoconductor (112) having an electrical conductivity dependent on an illumination (114) of a light-sensitive region (116) of the photoconductor (112);
    - at least one transimpedance amplifier (118), wherein the transimpedance amplifier (118)

comprises at least one inverting operational amplifier (120) and one or both of at least one feedback resistor (122) having a resistance $R_F$ or at least one feedback capacitor (126) having a capacity $C_F$.

11. The detector (132) according to the preceding claim, wherein the detector (132) comprises at least one evaluation device (134) adapted to determine at least one voltage output signal at at least one voltage output (128).

12. A method for optical detection of at least one illumination of at least one photodetector, wherein at least one photoconductor (112) is illuminated by at least one light beam, wherein the method comprises using at least one detector (132) according to any one of the preceding claims referring to a detector.

13. Use of a photodetector compensating circuit (110) according to any one of the preceding claims referring to a photodetector compensating circuit for a purpose of compensating at least one dependence of at least one signal of at least one photoconductor (112) on at least one parameter selected from the group consisting of: humidity, exposure to contaminants, illumination history, and temperature.

FIG.1

FIG.2

# FIG.3

# FIG.4

Europäisches
Patentamt

European
Patent Office

Office européen
des brevets

# EUROPEAN SEARCH REPORT

Application Number

EP 16 19 4833

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WYATT C L ET AL: "A direct coupled low noise preamplifier for cryogenically cooled photoconductive i.r. detectors", INFRARED PHYSICS, PERGAMON, vol. 14, no. 3, 1 September 1974 (1974-09-01), pages 165-176, XP024583695, ISSN: 0020-0891, DOI: 10.1016/0020-0891(74)90019-0 [retrieved on 1974-09-01] * page 165 - page 169 * * figure 2 * | 1-13 | INV. G01J1/44 G01J1/46 G01J3/02 H04N9/04 G01J1/02 H04N5/361 |
| X | Everett Companies Llc: "PREAMPLIFIERS FOR ELECTRO-OPTIC DETECTORS", , 1 January 1998 (1998-01-01), XP055364831, Retrieved from the Internet: URL:http://www.everettinfrared.com/preampl ifiers.pdf [retrieved on 2017-04-13] * page 1 - page 9 * * figure 2 * | 1-13 | |
| A | US 3 590 251 A (VOSTEEN ROBERT E) 29 June 1971 (1971-06-29) * the whole document * | 1-13 | TECHNICAL FIELDS SEARCHED (IPC) H03F G01J |

The present search report has been drawn up for all claims

| Place of search | Date of completion of the search | Examiner |
|---|---|---|
| Munich | 13 April 2017 | Haller, Mirjam |

EPO FORM 1503 03.82 (P04C01)

## ANNEX TO THE EUROPEAN SEARCH REPORT
## ON EUROPEAN PATENT APPLICATION NO.

EP 16 19 4833

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2017

| Patent document cited in search report | | Publication date | Patent family member(s) | Publication date |
|---|---|---|---|---|
| US 3590251 | A | 29-06-1971 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016120392 A1
- WO 2012110924 A1
- WO 2014097181 A1
- US 2012206336 A1
- US 2014291480 A1
- EP 2016051817 W

**Non-patent literature cited in the description**

- **D. SCARAMUZZA et al.** IEEE/RSJ International Conference on Intelligent Robots and Systems. *IROS,* 2007, 4164-4169
- **D. KLIMENTJEW et al.** *IEEE Conference on Multisensor Fusion and Integration for Intelligent Systems (MFI),* 2010, 236-241